# EUROPEAN PATENT APPLICATION

(11) **EP 4 539 444 A1**
(43) Date of publication of application: **16.04.2025**
(21) Application number: 23884455.9
(22) Date of filing: 08.09.2023
(51) Int. Cl.: H04M 1/72463

(54) **METHOD FOR CONTROLLING TURN-ON OF SCREEN, AND ELECTRONIC DEVICE**

(30) Priority: 04.11.2022 CN 202211379580
(71) Applicant: Honor Device Co., Ltd., Shenzhen, Guangdong 518040 (CN)
(72) Inventor: ZHANG, Wenli, Shenzhen, Guangdong 518040 (CN); HUANG, Di, Shenzhen, Guangdong 518040 (CN); LIU, Tieliang, Shenzhen, Guangdong 518040 (CN)
(74) Representative: Isarpatent
(86) International application number: PCT/CN2023/117632
(87) International publication number: WO 2024/093520

(57) **Abstract**

This application provides a screen-on controlling method and an electronic device. Through implementing technical solutions provided in this application, in a solution in which an attitude sensor is of equal importance to a Hall sensor, a device form of an electronic device is determined during closing the electronic device and unfolding the electronic device, so that on and off of two display screens can be properly controlled based on the device form. Proper controlling includes: During closing the electronic device when an initial status of the electronic device is unfolded, the electronic device may trigger an inner screen to be turned off and an outer screen to be turned on as soon as possible; and during unfolding the electronic device when the initial status of the electronic device is closed, the electronic device may trigger the outer screen to be turned off and the inner screen to be turned on as soon as possible.

## Description

This application claims priority to Chinese Patent Application No. 202211379580.0, filed with the China National Intellectual Property Administration on November 4, 2022 and entitled "SCREEN-ON CONTROLLING METHOD AND ELECTRONIC DEVICE", which is incorporated herein by reference in its entirety.

### TECHNICAL FIELD

This application relates to the field of terminals, and in particular, to a screen-on controlling method and an electronic device.

### BACKGROUND

Currently, an electronic device may be folded (which may also be referred to as closed) and unfolded (which may also be referred to as opened), and may include two display screens on different sides. One of the two display screens may be referred to as an inner screen, and the other one may be referred to as an outer screen. The inner screen may be understood as a display screen on the same side as a front-facing camera when the electronic device is not folded. The outer screen may be understood as a display screen on the same side as a rear-facing camera when the electronic device is not folded. The inner screen may be a display screen having a function of folding and unfolding. When the electronic device is folded, the inner screen is also folded. When the electronic device is unfolded, the inner screen is also unfolded.

During closing the electronic device and unfolding the electronic device, a proper design for on and off of the two display screens includes: During closing the electronic device when an initial status of the electronic device is unfolded, the electronic device may turn off the inner screen and turn on the outer screen as soon as possible. During unfolding the electronic device when the initial status of the electronic device is closed, the electronic device may turn off the outer screen and turn on the inner screen as soon as possible. Generally, such a design conforms to the expectation for screen-on when a user closes the electronic device and unfolds the electronic device.

How to better control on and off of the two display screens during closing the electronic device and unfolding the electronic device is worthy of attention.

### SUMMARY

This application provides a screen-on controlling method and an electronic device, to determine a device form based on different attitude sensors in different angle ranges, quickly respond to unfolding and closing of the electronic device, and control on and off of screens, thereby improving user experience.

According to a first aspect, this application provides a screen-on controlling method, applied to an electronic device having a foldable screen, where the electronic device includes an inner screen and an outer screen, the inner screen is foldable to form a first screen and a second screen, and the method includes: when an initial status of the electronic device is closed and both the inner screen and the outer screen are off, turning on, by the electronic device, the inner screen, and keeping the outer screen off when the electronic device is unfolded to cause a first included angle to be greater than or equal to a first angle, where the first included angle is an included angle between the first screen and the second screen; in a process of unfolding the electronic device when the initial status of the electronic device is closed, the first included angle increases; and in a process of closing the electronic device when the initial status of the electronic device is unfolded, the first included angle decreases; when the initial status of the electronic device is closed and at least one of the inner screen or the outer screen is on, causing the electronic device to be in a state in which the inner screen is on and the outer screen is off when the electronic device is unfolded to cause the first included angle to be greater than or equal to the first angle; and when the initial status of the electronic device is unfolded and at least one of the inner screen or the outer screen is on, causing the electronic device to be in a state in which the outer screen is on and the inner screen is off when the electronic device is closed to cause the first included angle to be less than or equal to a second angle, where the second angle is greater than the first angle.

In the foregoing embodiments, a first included angle may be an included angle of an inner screen involved in embodiments. When an initial status is closed, during opening an electronic device regardless of whether the electronic device when closed is in a screen-off state or a non-screen-off state, it may be determined that the electronic device is unfolded when the included angle of the inner screen is greater than or equal to a first angle (for example, 10°), so that the electronic device turns on the inner screen and turns on an outer screen. During closing the electronic device when the initial status is unfolded and the electronic device is in the non-screen-off state, the electronic device may determine that the electronic device is closed when the included angle of the inner screen is less than or equal to a second angle (for example, 60°), so that the electronic device can turn off the inner screen and turn on the outer screen. The second angle is greater than the first angle. In this way, during opening the electronic device when closed, screen-on can be triggered as soon as possible at a small angle; and during closing the electronic device when opened, screen-on can be triggered as soon as possible at a large angle. In this way, unfolding and closing of the electronic device can be quickly responded to, and on and off of the screens can be properly controlled, thereby improving user experience. The non-screen-off state includes that at least one of the inner screen or the outer screen is on, and the screen-off state includes that both the inner screen and the outer screen are off. The first angle is a preset angle 5 involved in embodiments, for example, may be an angle of "switching an approaching state to a far-away state of an unfolded state". The second angle may be a preset angle 2 involved in embodiments, for example, may be "an angle of switching the unfolded state to a folded state+a supplementary angle 2".

With reference to the first aspect, in some embodiments, after the electronic device is unfolded to cause the first included angle to be greater than or equal to the first angle when the inner screen is off and the outer screen is on, the method further includes: turning on, by the electronic device, the inner screen, and turning off the outer screen.

In the foregoing embodiments, when the initial status is closed, and the inner screen is off and the outer screen is on, when the electronic device is opened to cause the included angle of the inner screen to be greater than or equal to the first angle (for example, 10°), the electronic device can trigger the inner screen to be turned on and the outer screen to be turned off. In this case, a user expects to unfold and use the inner screen of the electronic device. In this case, the electronic device can be in the state in which the inner screen is on and the outer screen is off as soon as possible at a small angle, thereby conforming to a usage habit of the user.

With reference to the first aspect, in some embodiments, after the electronic device is unfolded to cause the first included angle to be greater than or equal to the first angle when both the inner screen and the outer screen are on, the method further includes: turning off, by the electronic device, the outer screen.

In the foregoing embodiments, when the initial status is closed and both the inner screen and the outer screen are on, when the electronic device is opened to cause the included angle of the inner screen to be greater than or equal to the first angle (for example, 10°), the electronic device can trigger the outer screen to be turned off and keep the inner screen on. In this case, the user expects to unfold and use the inner screen of the electronic device. In this case, the electronic device can be in the state in which the inner screen is on and the outer screen is off as soon as possible at a small angle, thereby conforming to the usage habit of the user.

With reference to the first aspect, in some embodiments, after the electronic device is closed to cause the first included angle to be less than or equal to the second angle when the inner screen is on and the outer screen is on, the method further includes: turning off, by the electronic device, the inner screen, and keeping the outer screen off.

In the foregoing embodiments, when the initial status is unfolded and both the inner screen and the outer screen are on, when the electronic device is closed to cause the included angle of the inner screen to be less than or equal to the second angle (for example, 60°), the electronic device can trigger the inner screen to be turned off and keep the inner screen on. In this case, the user expects to close and use the outer screen of the electronic device. In this case, the electronic device can be in the state in which the outer screen is on and the inner screen is off as soon as possible at a large angle, thereby conforming to the usage habit of the user.

With reference to the first aspect, in some embodiments, after the electronic device is closed to cause the first included angle to be less than or equal to the second angle when the inner screen is on and the outer screen is off, the method further includes: turning off, by the electronic device, the inner screen, and turning on the outer screen.

In the foregoing embodiments, when the initial status is unfolded, and the inner screen is on and the outer screen is off, when the electronic device is closed to cause the included angle of the inner screen to be less than or equal to the second angle (for example, 60°), the electronic device can trigger the inner screen to be turned off and the inner screen to be turned on. In this case, the user expects to close and use the outer screen of the electronic device. In this case, the electronic device can be in the state in which the outer screen is on and the inner screen is off as soon as possible at a large angle, thereby conforming to the usage habit of the user.

With reference to the first aspect, in some embodiments, the method further includes: when the first included angle is greater than or equal to the first angle and less than a third angle and the electronic device is in the state in which the inner screen is on and the outer screen is off, turning off, by the electronic device, the inner screen, and turning on the outer screen when the electronic device is closed to cause the first included angle to be less than or equal to a fourth angle, where the fourth angle is less than the first angle.

In the foregoing embodiments, the third angle may be a preset angle 3 involved in embodiments, for example, may be "an angle of switching the folded state to the unfolded state+a supplementary angle 1". The fourth angle may be a preset angle 6 involved in embodiments, for example, an angle of "switching the far-away state to the approaching state". When the first included angle ranges from the first angle (for example, 10°) to the third angle (for example, 65°), when the inner screen is on and then the electronic device is closed to the fourth angle (for example, 5°), it indicates that the user expects to close the electronic device, use the outer screen, and not use the inner screen. In this case, when the included angle of the inner screen is less than or equal to the fourth angle (for example, 5°), the electronic device turns off the inner screen and turns on the outer screen, thereby conforming to the usage habit of the user.

With reference to the first aspect, in some embodiments, when both the inner screen and the outer screen are off, after the electronic device turns on the inner screen and keeps the outer screen off when the electronic device is unfolded to cause the first included angle to be greater than or equal to the third angle at a first moment, the method further includes: turning off, by the electronic device, the inner screen, and turning on the outer screen when the electronic device is closed to cause the first included angle to be less than the second angle at a second moment, where the second moment is later than the first moment.

With reference to the first aspect, in some embodiments, a time difference between the second moment and the first moment is less than or equal to preset duration.

With reference to the first aspect, in some embodiments, a first form set for a first sensor of the electronic device includes that the first included angle is less than or equal to the first angle, and a second form set for the first sensor of the electronic device includes that the first included angle is greater than the first angle and less than the second angle; a first form set for a second sensor of the electronic device includes that the first included angle is less than the second angle; and when at least one of the inner screen or the outer screen is on, the electronic device starts the second sensor; and when the initial status of the electronic device is closed, and the inner screen is off and the outer screen is on, after the electronic device is unfolded to cause the first included angle to be greater than or equal to the first angle, the turning on, by the electronic device, the inner screen, and turning off the outer screen specifically includes: when the electronic device is unfolded to cause the first included angle of the inner screen to be greater than or equal to the first angle, turning on, by the electronic device, the inner screen, and turning off the outer screen when the electronic device determines, based on the first sensor, that a device form of the electronic device is changed from the first form to the second form, where the second form is different from the first form; and the first form indicates that the electronic device is folded, and the second form indicates that the electronic device is unfolded.

In the foregoing embodiments, the first sensor may be a Hall sensor involved in embodiments, the second sensor may be an attitude sensor involved in embodiments, the first form may be a folded state involved in embodiments, and the second form may be an unfolded state (for example, a semi-unfolded state, a fully-unfolded state, or an unfolded state mapped to by the far-away state) involved in embodiments.

Compared with a solution in which the Hall sensor is auxiliary and the attitude sensor is main, in the embodiments, the attitude sensor is of equal importance to the Hall sensor. When the attitude sensor operates, the electronic device may also perform screen-on controlling based on the device form reported by the Hall sensor. The device form is determined based on the Hall sensor during opening and closing at a small angle, and the device form is determined based on the attitude sensor during opening and closing at a large angle. Therefore, when the initial status of the electronic device is closed, and the inner screen is off and the outer screen is on, although the attitude sensor operates, because the Hall sensor also takes effect, when the electronic device is unfolded to a small angle (the first angle, for example, 10°), it may also be determined, based on the Hall sensor, that the device form of the electronic device is the unfolded state. In this case, the inner screen is turned on and the outer screen is turned off. In the process of unfolding the electronic device when closed, the response is fast, thereby improving the user experience. However, the solution in which the Hall sensor is auxiliary and the attitude sensor is main cannot achieve the effect. In a screen-on process, the attitude sensor is started, and the electronic device does not process a device form reported by the Hall sensor, even though the electronic device is unfolded to the first angle (for example, 10°). Therefore, although the Hall sensor determines that the device form is the unfolded state, the electronic device does not perform processing, and continues to wait for the included angle of the inner screen of the electronic device to be unfolded until the attitude sensor reports the device form (for example, the electronic device is unfolded to 45°), so that the inner screen is turned on and the outer screen is turned off.

Compared with a solution in which only the Hall sensor is used, in the embodiments, the attitude sensor is introduced, and the device form is determined based on the attitude sensor during opening and closing at a large angle. Therefore, when the initial status of the electronic device is unfolded, and the inner screen is on and the outer screen is off, when the electronic device is closed to a large angle (the second angle, for example, 60°), it may be determined, based on the attitude sensor, that the device form of the electronic device is a closed state. In this case, the inner screen is turned off and the outer screen is turned on. In the process of closing the electronic device when unfolded, the response is fast, thereby improving the user experience. However, the solution in which only the Hall sensor is used cannot achieve the effect. Because an operating interval of the Hall sensor is a small angle range (for example, 5° to 10°), when the electronic device is closed to the second angle (for example, 60°), the Hall sensor does not report a device form. This is because that the inner screen is turned off and the outer screen is turned on when the included angle of the inner screen is closed to the second angle (for example, 60°) cannot be realized based on the Hall sensor.

With reference to the first aspect, in some embodiments, when the initial status of the electronic device is closed, the first included angle is less than the first angle, and both the inner screen and the outer screen are off, after the electronic device is unfolded to cause the first included angle to be greater than or equal to the first angle, the turning on, by the electronic device, the inner screen, and keeping the outer screen off specifically includes: when the electronic device is unfolded to cause the first included angle to be greater than or equal to the first angle, turning on, by the electronic device, the inner screen, and keeping the outer screen off when the electronic device determines, based on the first sensor, that the device form of the electronic device is changed from the first form to the second form; and after the turning on, by the electronic device, the inner screen, and keeping the outer screen off, the method further includes: starting, by the electronic device, the second sensor, where the second sensor obtains a first event, where the first event indicates the device form of the electronic device; and turning off, by the electronic device, the inner screen, and turning on the outer screen when the second sensor determines that the first event is not a first frame event, or the first event is the first frame event and the first event indicates that the device form of the electronic device is the second form; or keeping, by the electronic device, the inner screen on and the outer screen off when the second sensor determines that the first event is a first frame event and the first event indicates that the device form of the electronic device is the first form.

In the foregoing embodiments, in some embodiments, during unfolding the electronic device when closed, after the Hall sensor reports the unfolded state, the inner screen is turned on. In this case, the attitude sensor may be started. When the first frame event reported by the attitude sensor is the folded state, the electronic device may not process the first frame event, to avoid triggering the inner screen to be turned off again after the inner screen is turned on in the process of unfolding the electronic device.

With reference to the first aspect, in some embodiments, the turning off, by the electronic device, the inner screen, and turning on the outer screen when the second sensor determines that the first event is not a first frame event, or the first event is the first frame event and the first event indicates that the device form of the electronic device is the second form specifically includes: turning off, by the electronic device, the inner screen, and turning on the outer screen when the second sensor determines that the first event is the first frame event, the first event indicates that the device form of the electronic device is the first form, and the first included angle is less than a fifth angle; and the skipping processing the first event when the second sensor determines that the first event is a first frame event and the first event indicates that the device form of the electronic device is the first form specifically includes: keeping, by the electronic device, the inner screen on and the outer screen off when the second sensor determines that the first event is the first frame event, the first event indicates that the device form of the electronic device is the first form, and the first included angle is greater than the fifth angle.

In the foregoing embodiments, the fifth angle may be a preset angle 7 (for example, 4°) involved in embodiments. During unfolding the electronic device when closed, when the electronic device is actually closed but the Hall sensor reports the far-away state (that is, the Hall sensor considers that the electronic device is unfolded), it may be considered that the Hall sensor fails. In this case, the attitude sensor may process the first frame event when the attitude sensor determines that the included angle is less than the preset angle 7, and trigger the inner screen to be turned off and the outer screen to be turned on. In this way, when the Hall sensor fails during opening and closing at a small angle, the device form of the electronic device is still prepared to be determined based on the attitude sensor, to perform screen-on controlling.

With reference to the first aspect, in some embodiments, the method further includes: when the first included angle is greater than or equal to the first angle and less than the third angle and the electronic device is in the state in which the inner screen is on and the outer screen is off, when the electronic device is closed to cause the first included angle to be less than or equal to the fourth angle, turning off, by the electronic device, the inner screen, and turning on the outer screen when the electronic device determines, based on the first sensor, that the device form of the electronic device is changed from the second form to the first form.

With reference to the first aspect, in some embodiments, the method further includes: when the initial status of the electronic device is unfolded and both the inner screen and the outer screen are off, keeping, by the electronic device, the outer screen off and the inner screen off when the electronic device is closed to be less than the fourth angle, where the fourth angle is less than the first angle.

In the foregoing embodiments, when the initial status is unfolded, and the inner screen is off and the outer screen is off, when the electronic device is closed to cause the included angle of the inner screen to be less than or equal to the fourth angle (for example, 5°), the electronic device can keep both the inner screen and the outer screen off. In this case, the user closes the electronic device when both the inner screen and the outer screen are off, which indicates that the user does not expect to use the electronic device again. In this case, the electronic device keeps both the outer screen and the inner screen off when closed, thereby conforming to the usage habit of the user.

With reference to the first aspect, in some embodiments, the first sensor is a Hall sensor, and the second sensor is an attitude sensor.

With reference to the first aspect, in some embodiments, when the initial status of the electronic device is unfolded and both the inner screen and the outer screen are off, keeping, by the electronic device, the outer screen off and the inner screen off when the electronic device is closed to be less than the fourth angle, where the fourth angle is less than the first angle.

In the foregoing embodiments, when the initial status is unfolded, and the inner screen is off and the outer screen is off, when the electronic device is closed to cause the included angle of the inner screen to be less than or equal to the fourth angle (for example, 5°), the electronic device can keep both the inner screen and the inner screen off. In this case, the user closes the electronic device when both the inner screen and the outer screen are off, which indicates that the user does not expect to use the electronic device again. In this case, the electronic device keeps both the outer screen and the inner screen off when closed, thereby conforming to the usage habit of the user.

With reference to the first aspect, in some embodiments, after the electronic device is unfolded to cause the first included angle to be greater than or equal to the first angle when the inner screen is on and the outer screen is off, the method further includes: keeping, by the electronic device, the inner screen on and the outer screen off.

In the foregoing embodiments, when the initial status is closed, and the inner screen is on and the outer screen is off, when the electronic device is opened to cause the included angle of the inner screen to be greater than or equal to the first angle (for example, 10°), the electronic device can keep the inner screen on and the outer screen off. In this case, the user expects to unfold and use the inner screen of the electronic device. In this case, the electronic device can be in the state in which the inner screen is on and the outer screen is off as soon as possible at a small angle, thereby conforming to the usage habit of the user.

With reference to the first aspect, in some embodiments, after the electronic device is closed to cause the first included angle to be less than or equal to the second angle when the inner screen is off and the outer screen is on, the method further includes: keeping, by the electronic device, the inner screen on and the outer screen off.

In the foregoing embodiments, when the initial status is unfolded, and the inner screen is off and the outer screen is on, when the electronic device is closed to cause the included angle of the inner screen to be less than or equal to the second angle (for example, 60°), the electronic device can keep the inner screen off and the inner screen on. In this case, the user expects to close and use the outer screen of the electronic device. In this case, the electronic device can be in the state in which the outer screen is on and the inner screen is off as soon as possible at a large angle, thereby conforming to the usage habit of the user.

According to a second aspect, this application provides an electronic device. The electronic device includes: one or more processors, and one or more memories, where the memory is coupled to the one or more processors, the memory is configured to store computer program code, the computer program code includes computer instructions, and the one or more processors invoke the computer instructions to enable the electronic device to perform the method described in the first aspect or any of the implementations of the first aspect.

In the foregoing embodiments, a first included angle may be an included angle of an inner screen involved in embodiments. When an initial status is closed, during opening an electronic device regardless of whether the electronic device when closed is in a screen-off state or a non-screen-off state, it may be determined that the electronic device is unfolded when the included angle of the inner screen is greater than or equal to a first angle (for example, 10°), so that the electronic device turns on the inner screen and turns on an outer screen. During closing the electronic device when the initial status is unfolded and the electronic device is in the non-screen-off state, the electronic device may determine that the electronic device is closed when the included angle of the inner screen is less than or equal to a second angle (for example, 60°), so that the electronic device can turn off the inner screen and turn on the outer screen. The second angle is greater than the first angle. In this way, during opening the electronic device when closed, screen-on can be triggered as soon as possible at a small angle; and during closing the electronic device when opened, screen-on can be triggered as soon as possible at a large angle. In this way, unfolding and closing of the electronic device can be quickly responded to, and on and off of the screens can be properly controlled, thereby improving user experience. The non-screen-off state includes that at least one of the inner screen or the outer screen is on, and the screen-off state includes that both the inner screen and the outer screen are off. The first angle is a preset angle 5 involved in embodiments, for example, may be an angle of "switching an approaching state to a far-away state of an unfolded state". The second angle may be a preset angle 2 involved in embodiments, for example, may be "an angle of switching the unfolded state to a folded state+a supplementary angle 2".

According to a third aspect, an embodiment of this application provides a chip system. The chip system is used in an electronic device, the chip system includes one or more processors, and the processors are configured to invoke computer instructions to enable the electronic device to perform the method described in the first aspect or any of the implementations of the first aspect.

In the foregoing embodiments, a first included angle may be an included angle of an inner screen involved in embodiments. When an initial status is closed, during opening an electronic device regardless of whether the electronic device when closed is in a screen-off state or a non-screen-off state, it may be determined that the electronic device is unfolded when the included angle of the inner screen is greater than or equal to a first angle (for example, 10°), so that the electronic device turns on the inner screen and turns on an outer screen. During closing the electronic device when the initial status is unfolded and the electronic device is in the non-screen-off state, the electronic device may determine that the electronic device is closed when the included angle of the inner screen is less than or equal to a second angle (for example, 60°), so that the electronic device can turn off the inner screen and turn on the outer screen. The second angle is greater than the first angle. In this way, during opening the electronic device when closed, screen-on can be triggered as soon as possible at a small angle; and during closing the electronic device when opened, screen-on can be triggered as soon as possible at a large angle. In this way, unfolding and closing of the electronic device can be quickly responded to, and on and off of the screens can be properly controlled, thereby improving user experience. The non-screen-off state includes that at least one of the inner screen or the outer screen is on, and the screen-off state includes that both the inner screen and the outer screen are off. The first angle is a preset angle 5 involved in embodiments, for example, may be an angle of "switching an approaching state to a far-away state of an unfolded state". The second angle may be a preset angle 2 involved in embodiments, for example, may be "an angle of switching the unfolded state to a folded state+a supplementary angle 2".

According to a fourth aspect, an embodiment of this application provides a computer program product including instructions. When the computer program product is run on an electronic device, the electronic device is enabled to perform the method described in the first aspect or any of the implementations of the first aspect.

In the foregoing embodiments, a first included angle may be an included angle of an inner screen involved in embodiments. When an initial status is closed, during opening an electronic device regardless of whether the electronic device when closed is in a screen-off state or a non-screen-off state, it may be determined that the electronic device is unfolded when the included angle of the inner screen is greater than or equal to a first angle (for example, 10°), so that the electronic device turns on the inner screen and turns on an outer screen. During closing the electronic device when the initial status is unfolded and the electronic device is in the non-screen-off state, the electronic device may determine that the electronic device is closed when the included angle of the inner screen is less than or equal to a second angle (for example, 60°), so that the electronic device can turn off the inner screen and turn on the outer screen. The second angle is greater than the first angle. In this way, during opening the electronic device when closed, screen-on can be triggered as soon as possible at a small angle; and during closing the electronic device when opened, screen-on can be triggered as soon as possible at a large angle. In this way, unfolding and closing of the electronic device can be quickly responded to, and on and off of the screens can be properly controlled, thereby improving user experience. The non-screen-off state includes that at least one of the inner screen or the outer screen is on, and the screen-off state includes that both the inner screen and the outer screen are off. The first angle is a preset angle 5 involved in embodiments, for example, may be an angle of "switching an approaching state to a far-away state of an unfolded state". The second angle may be a preset angle 2 involved in embodiments, for example, may be "an angle of switching the unfolded state to a folded state+a supplementary angle 2".

According to a fifth aspect, an embodiment of this application provides a computer-readable storage medium, including instructions. When the instructions are run on an electronic device, the electronic device is enabled to perform the method described in the first aspect or any of the implementations of the first aspect.

In the foregoing embodiments, a first included angle may be an included angle of an inner screen involved in embodiments. When an initial status is closed, during opening an electronic device regardless of whether the electronic device when closed is in a screen-off state or a non-screen-off state, it may be determined that the electronic device is unfolded when the included angle of the inner screen is greater than or equal to a first angle (for example, 10°), so that the electronic device turns on the inner screen and turns on an outer screen. During closing the electronic device when the initial status is unfolded and the electronic device is in the non-screen-off state, the electronic device may determine that the electronic device is closed when the included angle of the inner screen is less than or equal to a second angle (for example, 60°), so that the electronic device can turn off the inner screen and turn on the outer screen. The second angle is greater than the first angle. In this way, during opening the electronic device when closed, screen-on can be triggered as soon as possible at a small angle; and during closing the electronic device when opened, screen-on can be triggered as soon as possible at a large angle. In this way, unfolding and closing of the electronic device can be quickly responded to, and on and off of the screens can be properly controlled, thereby improving user experience. The non-screen-off state includes that at least one of the inner screen or the outer screen is on, and the screen-off state includes that both the inner screen and the outer screen are off. The first angle is a preset angle 5 involved in embodiments, for example, may be an angle of "switching an approaching state to a far-away state of an unfolded state". The second angle may be a preset angle 2 involved in embodiments, for example, may be "an angle of switching the unfolded state to a folded state+a supplementary angle 2".

### BRIEF DESCRIPTION OF DRAWINGS

FIG. 1A to FIG. 1D are schematic diagrams of a device form of an electronic device having a vertical folding characteristic according to an embodiment of this application;
FIG. 2 is a schematic diagram of an electronic device having a horizontal folding characteristic according to an embodiment of this application;
FIG. 3 shows a process in which an attitude sensor reports an attitude event;
FIG. 4 shows a process in which a Hall sensor reports a Hall event;
FIG. 5 is a block diagram of an example of a software structure when an electronic device performs screen-on controlling;
FIG. 6A to FIG. 6D are schematic diagrams of performing screen-on controlling based on Preset rule 1;
FIG. 7A to FIG. 7C show an interaction procedure of modules when an electronic device performs screen-on controlling in Case 11;
FIG. 8 shows an interaction procedure of modules when an electronic device performs screen-on controlling in Case 12;
FIG. 9A and FIG. 9B are schematic diagrams of performing screen-on controlling based on Preset rule 2;
FIG. 10A to FIG. 10C show an interaction procedure of modules when an electronic device performs screen-on controlling in Case 21;
FIG. 11 shows an interaction procedure of modules when an electronic device performs screen-on controlling in Case 22; and
FIG. 12 is a schematic diagram of a structure of an electronic device according to an embodiment of this application.

### DESCRIPTION OF EMBODIMENTS

Terms used in the following embodiments of this application are only intended to describe particular embodiments, and are not intended to limit this application. As used in this specification and the claims of this application, a singular expression form, "one", "a", "said", "foregoing", "the", or "this", is intended to also include a plural expression form, unless clearly indicated to the contrary in the context. It should be further understood that the term "and/or" used in this application indicates and includes any or all possible combinations of one or more listed items.

In the following, the terms "first" and "second" are only used for description purposes, and cannot be understood as indicating or implying relative importance or implicitly indicating a quantity of indicated technical features. Therefore, a feature defined to be "first" or "second" may explicitly or implicitly include one or more features. In the description of embodiments of this application, unless otherwise stated, "a plurality of" means two or more.

In an existing solution, unfolding and folding cases of an electronic device are determined by using a Hall sensor. When the electronic device is switched from folded to unfolded, the Hall sensor may determine that the electronic device is unfolded when an included angle of an inner screen (which may also be referred to as an inner screen included angle) is unfolded to an angle 1 (for example, 10°). In this case, the electronic device may trigger the outer screen to be turned off and the inner screen to be turned on. However, there is a limitation on design of the Hall sensor: In a process of closing the electronic device when the electronic device is unfolded, the Hall sensor may only determine that the electronic device is folded when the included angle of the inner screen is closed to be less than or equal to an angle 2 (for example, 5°). In this case, if the electronic device triggers the inner screen to be turned off and the outer screen to be turned on, it seems "too late", and it does not conform to the expectation that a user expects to trigger the inner screen to be turned off and the outer screen to be turned on as soon as possible during closing the electronic device.

In the existing solution, only the Hall sensor is used to control on and off of the screens. An operating interval of the Hall sensor is in a small angle range, and the angle range is generally that the included angle of the inner screen ranges from 5° to 10°, where the operating interval is an angle range in which the Hall sensor can report a device form. Therefore, during opening and closing the electronic device at a small angle, the Hall sensor has good performance, and during opening and closing the electronic device at a large angle, the Hall sensor has poor performance: When only the Hall sensor is used, although it is possible to quickly cause the inner screen to be turned on and the outer screen to be turned off (for example, the electronic device is unfolded to 10°) in a process of opening the electronic device when the initial status of the electronic device is closed, it is not possible to quickly cause the inner screen to be turned off and the outer screen to be turned on in a process of closing the electronic device when the initial status of the electronic device is unfolded. For example, in the process of closing the electronic device, the inner screen can be turned off and the outer screen can be turned on only when the included angle of the inner screen is closed to 5°. In other words, in the process of closing the electronic device when unfolded, the Hall sensor has poor performance and has a slow response, affecting user experience.

An embodiment of this application provides a screen-on controlling method. A Hall sensor and an attitude sensor may be used in combination, to determine a device form based on different attitude sensors in different angle ranges, quickly respond to unfolding and closing of an electronic device, and control on and off of screens, thereby improving user experience. In the method, during opening and closing at a small angle, the electronic device still controls on and off of the screens based on the Hall sensor, so that an advantage of the Hall sensor is retained. However, during opening and closing at a large angle, the attitude sensor is introduced, and the electronic device may control on and off of the screens based on the attitude sensor, so that the electronic device quickly responds to (for example, the electronic device is closed to 40° or 60°) and is closed, so that the inner screen is turned off and the outer screen is turned on. In this way, a defect of the Hall sensor can be compensated for. The reason is that an operating interval of the attitude sensor may be larger than that of the Hall sensor, and the attitude sensor may determine the device form of the electronic device in a large angle range (for example, 40° to 65°), so that the electronic device controls on and off of the screens based on the device form.

The method may be applied to an electronic device having a vertical folding characteristic or a horizontal folding characteristic, and the electronic device includes two display screens on different sides. One of the two display screens may be referred to as an inner screen, and the other one may be referred to as an outer screen. The electronic device may determine, based on a preset rule, a change of a device form of the electronic device by using a Hall sensor and an attitude sensor, so that in more scenarios, the electronic device implements proper screen-on when unfolded or folded.

In some possible cases, the device form of the electronic device may include an unfolded state and a folded state. The unfolded state may further include a semi-unfolded state and a fully-unfolded state.

**The following describes the device form of the electronic device configured with the vertical folding characteristic.**

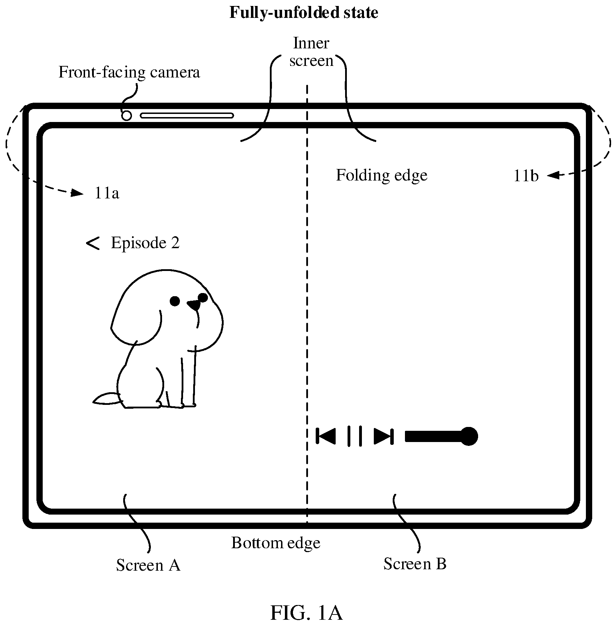

For example, FIG. 1A to FIG. 1D are schematic diagrams of a device form of an electronic device having a vertical folding characteristic according to an embodiment of this application. A folding edge for vertical folding is perpendicular to a top edge line (for ease of description, the top edge line is referred to as a top edge for short) and a bottom edge line (for ease of description, the bottom edge line is referred to as a bottom edge for short) of the electronic device.

FIG. 1A is a schematic diagram of an unfolded form of a vertically foldable electronic device. As shown in FIG. 1A, the electronic device is not folded. An inner screen is a display screen on the same side as a front-facing camera when the electronic device is not folded. In this case, it may be considered that an included angle of the inner screen is 180°. The included angle of the inner screen may be considered as: The inner screen is divided into a screen A and a screen B along the folding edge, and an included angle formed between the screen A and the screen B may be referred to as the included angle of the inner screen.

When folding is performed based on a direction 11a and/or a direction 11b shown in FIG. 1A, all device forms in a range of 180° to a preset angle 1 (for example, 145°) of the included angle of the inner screen may be referred to as a fully-unfolded state of the electronic device.

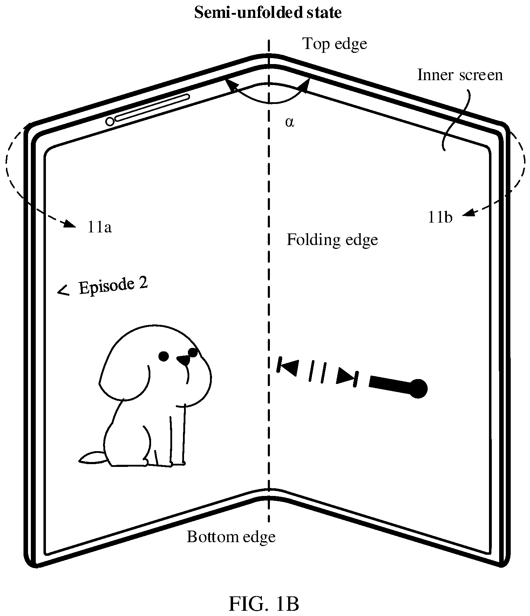

When folding is performed based on the direction 11a and/or the direction 11b shown in FIG. 1A, all included angles of the electronic device in a range of the preset angle 1 (for example, 145°) to a preset angle 2 (for example, 40°) of the included angle of the inner screen may be considered as a semi-unfolded state of the electronic device. For a schematic diagram of a semi-unfolded state, refer to FIG. 1B. An included angle (α) of the inner screen may be any angle ranging from the preset angle 1 to the preset angle 2. The preset angle 1 is greater than the preset angle 2.

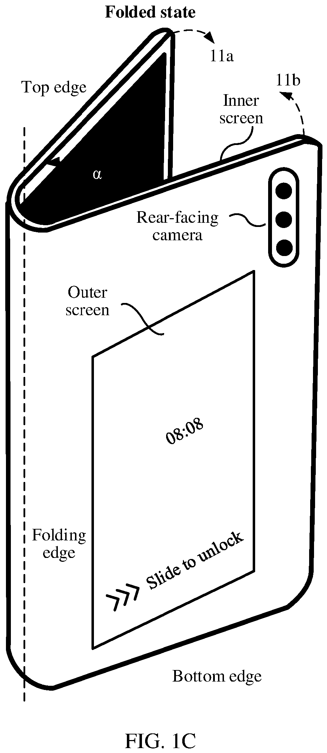

When folding is performed based on the direction 11a and/or the direction 11b shown in FIG. 1B, all included angles of the electronic device in a range of the preset angle 2 (for example, 40°) to 0° of the included angle of the inner screen may be considered as a folded state of the electronic device. For a schematic diagram of a folded state, refer to FIG. 1C. The included angle (α) of the inner screen may be any angle ranging from the preset angle 2 to 0°. When the electronic device is in the folded state, the electronic device may trigger the inner screen to be turned off and an outer screen to be turned on. The outer screen may be considered as a display screen on the same side as a rear-facing camera when the electronic device is not folded.

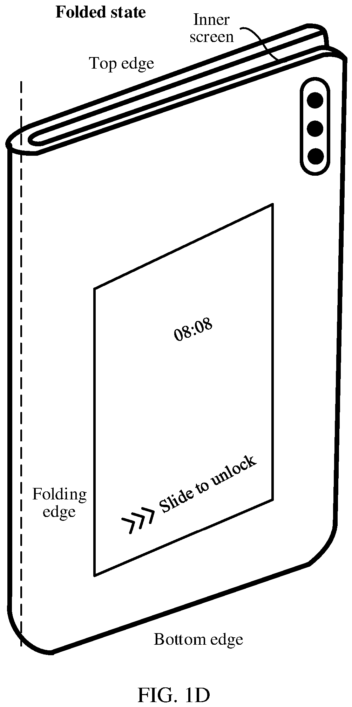

When folding is performed based on the direction 11a and/or the direction 11b shown in FIG. 1C, the included angle of the inner screen is 0°, and as shown in FIG. 1D, the electronic device is completely closed. In this case, the device form of the electronic device may also be referred to as the folded state. In FIG. 1D, the screen A and the screen B are opposite, and are invisible to a user.

It should be understood that, in FIG. 1A to FIG. 1D, an example of a process of closing the electronic device when an initial status of the electronic device is unfolded (for example, the angle is equal to 180° or approaches 180° in the unfolded state) is used for description.

Closing the electronic device refers to making the included angle of the inner screen of the electronic device gradually decrease, for example, making the included angle of the inner screen approach 0° or be equal to 0° gradually. That the initial status is unfolded means that the device form of the electronic device is the unfolded state before the electronic device is closed, and the included angle of the inner screen is generally greater than the preset angle 2 (for example, 40°). For example, when the included angle of the inner screen is 180°, the device form may be considered as an unfolded state.

Refer to content and descriptions in FIG. 1A to FIG. 1D. For a case in which the electronic device is unfolded when the initial status of the electronic device is closed (the angle is equal to 0° or approaches 0°), the device form of the electronic device includes: When the included angle of the inner screen ranges from 0° to a preset angle 3 (for example, 45°), the device form of the electronic device may be the folded state; when the included angle of the inner screen ranges from the preset angle 3 (for example, 45°) to a preset angle 4 (for example, 150°), the device form of the electronic device may be the semi-unfolded state; and when the included angle of the inner screen ranges from the preset angle 4 (for example, 150°) to 180°, the device form of the electronic device may be the fully-unfolded state. The preset angle 3 is less than the preset angle 4. The preset angle 3 may be equal to the preset angle 2, or may not be equal to the preset angle 2. The preset angle 1 may be equal to the preset angle 4, or may not be equal to the preset angle 4. This is not limited in embodiments of this application.

Unfolding the electronic device refers to making the included angle of the inner screen of the electronic device gradually increase, for example, making the included angle of the inner screen approach 180° or be equal to 180° gradually. That the initial status is closed means that the included angle of the inner screen of the electronic device approaches or is equal to 0° before the electronic device is unfolded. Generally, the included angle of the inner screen is less than 10°.

**The following describes the device form of the electronic device configured with the horizontal folding characteristic.**

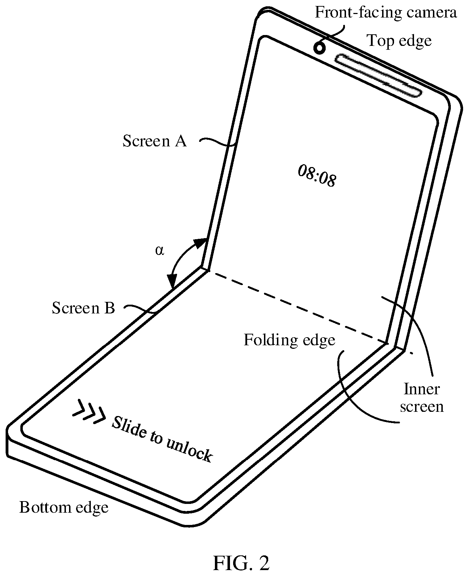

For example, FIG. 2 is a schematic diagram of an electronic device having a horizontal folding characteristic according to an embodiment of this application. An inner screen is a display screen on the same side as a front-facing camera when the electronic device is not folded. An outer screen (not shown) may be considered as a display screen on the same side as a rear-facing camera when the electronic device is not folded. When unfolded, it may be considered that an included angle of the inner screen is 180°. An included angle (α) of the inner screen may be considered as: The inner screen is divided into a screen A and a screen B along a folding edge, and an included angle formed between the screen A and the screen B may be referred to as the included angle of the inner screen. A difference from the vertically folded electronic device is that the folding edge of the horizontally folded screen is parallel to a top edge and a bottom edge of the electronic device. Other descriptions of the device form of the horizontally folded electronic device are the same as the foregoing descriptions in FIG. 1A to FIG. 1D. Refer to the foregoing descriptions in FIG. 1A to FIG. 1D. Details are not described herein again.

In some possible cases, in addition to the folded state, the semi-unfolded state, and the fully-unfolded state described above, the device form of the electronic device further includes an approaching state and a far-away state.

The approaching state and the far-away state are described by using an example of a process of unfolding the electronic device when the initial status of the electronic device is closed. In this case, the approaching state includes a form of the electronic device when the included angle of the inner screen ranges from 0° to a preset angle 5 (for example, 10°); and the far-away state includes a form of the electronic device when the included angle of the inner screen ranges from the preset angle 5 (for example, 10°) to 180°. The preset angle 5 is less than the preset angle 2.

The approaching state and the far-away state are described by using an example in which the electronic device is closed when the initial status of the electronic device is unfolded. In this case, the far-away state includes a form of the electronic device when the included angle of the inner screen ranges from 180° to a preset angle 6 (for example, 5°); and the approaching state includes a form of the electronic device when the included angle of the inner screen ranges from the preset angle 6 (for example, 5°) to 0°. The preset angle 6 is less than the preset angle 2. There may be no limitation on a size relationship between the preset angle 5 and the preset angle 6. However, generally, the preset angle 5 may be greater than the preset angle 6.

In some possible cases, the electronic device may determine the device form of the electronic device by using a Hall sensor and an attitude sensor. For example, both the attitude sensor and the Hall sensor may determine the device form based on data such as the included angle of the inner screen. Generally, the Hall sensor may report a device form when the included angle of the inner screen is small (for example, less than or equal to 10°), and the attitude sensor may report a device form when the included angle of the inner screen is large (for example, greater than or equal to 45°). The electronic device may determine the device form only when the Hall sensor and the attitude sensor report the device forms, and then control on and off of screening (including the inner screen and the outer screen) based on the device form. In addition, occasions for the Hall sensor and the attitude sensor to report device forms include: A first frame after starting (where one frame is one device form) may be reported; and starting from a second frame, reporting may be performed when it is detected that the device form of the electronic device is changed compared with a previous frame.

Based on physical characteristics of the Hall sensor and the attitude sensor described above, in some possible cases, the attitude sensor may be configured to determine that the device form of the electronic device is one of the folded state, the semi-unfolded state, or the fully-unfolded state; and the Hall sensor may be configured to determine that the device form of the electronic device is one of the approaching state or the far-away state.

For ease of description, a device form reported by the attitude sensor may be referred to as an attitude event hereinafter, and a device form reported by the Hall sensor is referred to as a Hall event.

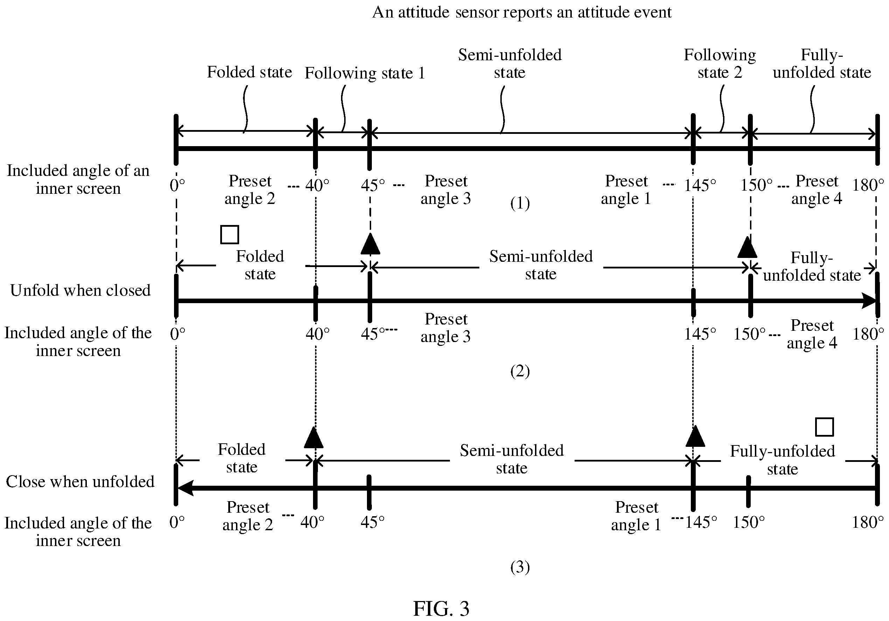

**FIG. 3** **shows a process in which an attitude sensor reports an attitude** event.

**The following describes an example of the process in which the attitude sensor reports the attitude event with reference to** **FIG. 3****.**

As shown in (1) of FIG. 3, when the included angle of the inner screen ranges from 0° to the preset angle 2 (for example, 40°), the attitude sensor may determine that the device form of the electronic device is the folded state. When the included angle of the inner screen ranges from the preset angle 3 (for example, 45°) to the preset angle 1 (for example, 145°), the attitude sensor may determine that the device form of the electronic device is the semi-unfolded state. When the included angle of the inner screen ranges from the preset angle 4 (for example, 150°) to 180°, the attitude sensor may determine that the device form of the electronic device is the fully-unfolded state.

When the included angle of the inner screen ranges from the preset angle 2 (for example, 40°) to the preset angle 3 (for example, 45°), the device form of the electronic device may also be referred to as a following state 1. The following state 1 indicates: If a previous frame is the folded state, when the included angle of the inner screen ranges from the preset angle 2 (for example, 40°) to the preset angle 3 (for example, 45°), a current frame obtained by the attitude sensor is also the folded state; and if the previous frame is the semi-unfolded state, when the included angle of the inner screen ranges from the preset angle 2 (for example, 40°) to the preset angle 3 (for example, 45°), the current frame obtained by the attitude sensor is also the semi-unfolded state. In other words, it may be understood that, as shown in (2) of FIG. 3, during unfolding the electronic device when the initial status of the electronic device is closed, when the included angle of the inner screen ranges from the preset angle 2 (for example, 40°) to the preset angle 3 (for example, 45°), the attitude sensor may determine that the device form of the electronic device is the folded state. As shown in (3) of FIG. 3, during closing the electronic device when the initial status of the electronic device is unfolded, when the included angle of the inner screen ranges from the preset angle 2 (for example, 40°) to the preset angle 3 (for example, 45°), the attitude sensor may determine that the device form of the electronic device is the semi-unfolded state.

When the included angle of the inner screen ranges from the preset angle 1 (for example, 145°) to the preset angle 4 (for example, 150°), the device form of the electronic device may also be referred to as a following state 2. The following state 2 indicates: If the previous frame is the semi-unfolded state, when the included angle of the inner screen ranges from the preset angle 1 (for example, 145°) to the preset angle 4 (for example, 150°), the current frame obtained by the attitude sensor is also the semi-unfolded state; and if the previous frame is the fully-unfolded state, when the included angle of the inner screen ranges from the preset angle 1 (for example, 145°) to the preset angle 4 (for example, 150°), the current frame obtained by the attitude sensor is also the fully-unfolded state. In other words, it may be understood that, as shown in (2) of FIG. 3, during unfolding the electronic device when the initial status of the electronic device is closed, when the included angle of the inner screen ranges from the preset angle 1 (for example, 145°) to the preset angle 4 (for example, 150°), the attitude sensor may determine that the device form of the electronic device is the semi-unfolded state. As shown in (3) of FIG. 3, during closing the electronic device when the initial status of the electronic device is unfolded, when the included angle of the inner screen ranges from the preset angle 1 (for example, 145°) to the preset angle 4 (for example, 150°), the attitude sensor may determine that the device form of the electronic device is the fully-unfolded state.

Occasions for the attitude sensor to report device forms include: A first frame after starting (where one frame is one device form) may be reported; and starting from a second frame, reporting may be performed when it is detected that the device form of the electronic device is changed compared with a previous frame.

For example, as shown in (2) of FIG. 3, positions of black triangle symbols may be examples of occasions for the attitude sensor to report attitude events. During unfolding the electronic device when closed, in a process in which the included angle of the inner screen is changed from less than the preset angle 3 to greater than the preset angle 3, the device form of the electronic device is changed from the folded state to the semi-unfolded state. In this case, the attitude sensor may report one frame of device form (which is the semi-unfolded state in this case). In a process in which the included angle of the inner screen is changed from ranging from the preset angle 3 to the preset angle 4 to greater than the preset angle 4, the device form of the electronic device is changed from the semi-unfolded state to the fully-unfolded state. In this case, the attitude sensor may report one frame of device form (which is the fully-unfolded state in this case). It should be understood that, the attitude sensor is started only when the included angle of the inner screen is less than the preset angle 3. In this case, a first frame of device form (which is the folded state in this case) after starting may also be reported. One reporting occasion may be at a white square shown in (2) of FIG. 3.

For another example, as shown in (3) of FIG. 3, positions of triangle symbols may be examples of occasions for the attitude sensor to report attitude events. During closing the electronic device when unfolded, in a process in which the included angle of the inner screen is changed from greater than the preset angle 1 to less than the preset angle 1, the device form of the electronic device is changed from the fully-unfolded state to the semi-unfolded state. In this case, the attitude sensor may report one frame of device form (which is the semi-unfolded state in this case). In a process in which the included angle of the inner screen is changed from ranging from the preset angle 1 to the preset angle 2 to less than the preset angle 2, the device form of the electronic device is changed from the semi-unfolded state to the folded state. In this case, the attitude sensor may report one frame of device form (which is the folded state in this case). It should be understood that, the attitude sensor is started only when the included angle of the inner screen is greater than the preset angle 1. In this case, a first frame of device form (which is the fully-unfolded state in this case) after starting may also be reported. One reporting occasion may be at a white square shown in (3) of FIG. 3.

Closing the electronic device when unfolded refers to the process of closing the electronic device when the initial status of the electronic device is unfolded. Unfolding the electronic device when closed refers to the process of unfolding the electronic device when initial status of the electronic device is closed.

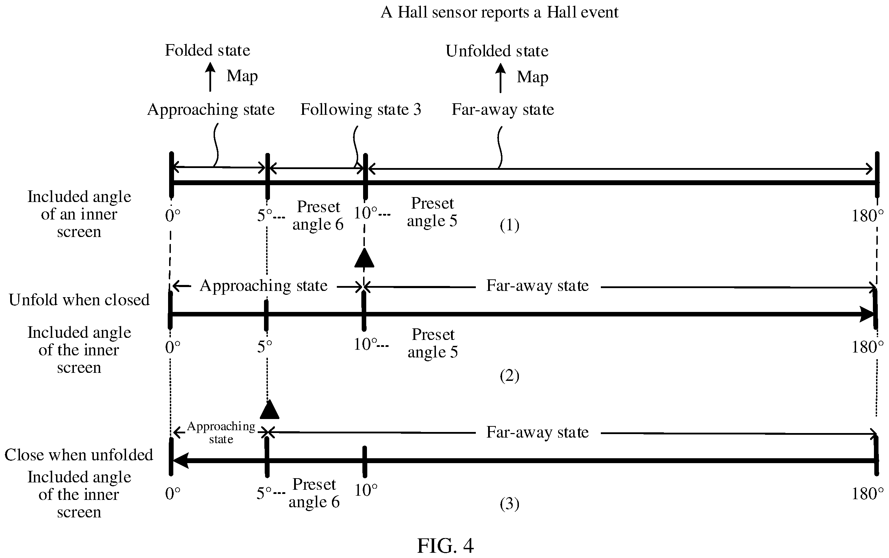

**FIG. 4** **shows a process in which a Hall sensor reports a Hall event.**

**The following describes an example of the process in which the Hall sensor reports the Hall event with reference to** **FIG. 4****.**

As shown in (1) of FIG. 4, when the included angle of the inner screen ranges from 0° to the preset angle 6 (for example, 5°), the Hall sensor may determine that the device form of the electronic device is the approaching state. When the included angle of the inner screen ranges from the preset angle 5 (for example, 10°) to 180°, the Hall sensor may determine that the device form of the electronic device is the far-away state.

When the included angle of the inner screen ranges from the preset angle 6 (for example, 5°) to the preset angle 5 (for example, 10°), the device form of the electronic device may also be referred to as a following state 3. The following state 3 indicates: If a previous frame is the approaching state, when the included angle of the inner screen ranges from the preset angle 6 (for example, 5°) to the preset angle 5 (for example, 10°), a current frame obtained by the Hall sensor is also the approaching state. In other words, it may be understood that, as shown in (2) of FIG. 4, during unfolding the electronic device when the initial status of the electronic device is closed, when the included angle of the inner screen ranges from the preset angle 6 (for example, 5°) to the preset angle 5 (for example, 10°), the Hall sensor may determine that the device form of the electronic device is the approaching state. If the previous frame is the far-away state, when the included angle of the inner screen ranges from the preset angle 6 (for example, 5°) to the preset angle 5 (for example, 10°), the current frame obtained by the Hall sensor is also the far-away state. In other words, it may be understood that, as shown in (3) of FIG. 4, during closing the electronic device when the initial status of the electronic device is unfolded, when the included angle of the inner screen ranges from the preset angle 6 (for example, 5°) to the preset angle 5 (for example, 10°), the Hall sensor may determine that the device form of the electronic device is the far-away state.

In some possible cases, the electronic device may map the reported approaching state to the folded state, and map the reported far-away state to the unfolded state (the semi-unfolded state or the fully-unfolded state).

Occasions for the Hall sensor to report device forms include: A first frame after starting (where one frame is one device form) may be reported; and starting from a second frame, reporting may be performed when it is detected that the device form of the electronic device is changed compared with a previous frame.

For example, as shown in (2) of FIG. 4, positions of black triangle symbols may be examples of occasions for the Hall sensor to report Hall events. During unfolding the electronic device when closed, in a process in which the included angle of the inner screen is changed from less than the preset angle 5 to greater than the preset angle 5, the device form of the electronic device is changed from the approaching state to the far-away state. In this case, the Hall sensor may report one frame of device form (which is the far-away state in this case).

For another example, as shown in (3) of FIG. 4, positions of black triangle symbols may be examples of occasions for the Hall sensor to report Hall events. During closing the electronic device when unfolded, in a process in which the included angle of the inner screen is changed from greater than the preset angle 6 to less than the preset angle 6, the device form of the electronic device is changed from the far-away state to the approaching state. In this case, the Hall sensor may report one frame of device form (which is the approaching state in this case).

**In embodiments of this application, based on the preset rule, the Hall sensor and the attitude sensor may obtain and report the device forms. The electronic device may fuse the device forms reported by the Hall sensor and the attitude sensor, to determine a final device form of the electronic device. In the process of closing the electronic device, when the device form of the electronic device is switched from the unfolded state to the folded state, the inner screen is turned off and the outer screen is turned on. In the process of unfolding the electronic device, when the device form of the electronic device is switched from the folded state to the unfolded state, the outer screen is turned off and the inner screen is turned on. The preset rule includes, but is not limited to the following rules.**

**Preset rule 1:** The attitude sensor is main, and the Hall sensor is auxiliary. Specifically, in a screen-off state (in which both the inner screen and the outer screen are off), the electronic device closes the attitude sensor; and in a non-screen-off state (in which the inner screen is on and/or the outer screen is on), the electronic device starts the attitude sensor. Regardless of the screen-off state or the non-screen-off state, the Hall sensor is started after the electronic device is powered on. However, in the non-screen-off state, a Hall event reported by the Hall sensor is not processed; and the electronic device determines the device form of the electronic device based on an attitude event most recently reported by the attitude sensor, and performs screen-on controlling based on the device form. In the screen-off state, the electronic device determines the device form of the electronic device based on a Hall event reported by the Hall sensor, and performs screen-on controlling based on the device form. In the screen-off state, the electronic device may not use the attitude sensor to obtain an attitude event.

**Preset rule 1 further includes a special case (Special case 1):** When the initial status of the electronic device is closed and is the screen-off state, when the electronic device is unfolded to cause the included angle of the inner screen to be greater than or equal to the preset angle 5 (for example, 10°), the Hall sensor may determine that the device form of the electronic device is the far-away state, and report the far-away state; and the electronic device determines, based on the far-away state, that the device form of the electronic device is the unfolded state, and triggers the inner screen to be turned on and keeps the outer screen off. After the inner screen is turned on, the attitude sensor is started, so that the attitude sensor can obtain and report an attitude event. From the preset angle 5 (for example, 10°) to the preset angle 3 (for example, 45°), the attitude sensor may report a first frame (first frame) of attitude event (attitude event A). When the attitude event A is one frame of folded state, the attitude event A conflicts with the unfolded state mapped to by the far-away state reported by the Hall sensor. For Special case 1, a manner in which the electronic device handles the conflict may include: In Special case 1, within preset time T (for example, 1s) after the attitude sensor reports the attitude event A, the electronic device does not process the attitude event.

**Preset rule 2:** The attitude sensor is of equal importance to the Hall sensor. Specifically, in a screen-off state (in which both the inner screen and the outer screen are off), the electronic device closes the attitude sensor; and in the non-screen-off state (in which the inner screen is on and/or the outer screen is on), the electronic device starts the attitude sensor. The Hall sensor is started after the electronic device is powered on. When the attitude sensor reports an attitude event, during closing and unfolding, the electronic device may determine the device form of the electronic device based on the attitude event, and perform screen-on controlling based on the device form. When the Hall sensor reports a Hall event, during closing and unfolding, the electronic device may determine the device form of the electronic device based on the Hall event, and perform screen-on controlling based on the device form.

**Preset rule 2 further includes a special case (Special case 2):** When the initial status of the electronic device is closed and is the screen-off state, when the electronic device is unfolded to cause the included angle of the inner screen to be greater than or equal to the preset angle 5 (for example, 10°), the Hall sensor may determine that the device form of the electronic device is the far-away state, and report the far-away state; and the electronic device determines, based on the far-away state, that the device form of the electronic device is the unfolded state, and triggers the inner screen to be turned on and keeps the outer screen off. After the inner screen is turned on, the attitude sensor is started, so that an attitude event can be obtained and reported. From the preset angle 5 (for example, 10°) to the preset angle 3 (for example, 45°), the attitude sensor may obtain a first frame of attitude event (attitude event B). When the attitude event B is one frame of folded state, the attitude event B conflicts with the unfolded state mapped to by the far-away state reported by the Hall sensor. For Special case 2, a manner in which the electronic device handles the conflict includes, but is not limited to the following manners.

**Manner 1:** In Special case 2, after the attitude sensor determines that the attitude event B is the folded state, the attitude event B may not be reported. In this case, the electronic device may not perform screen-on controlling based on the attitude event B. In this way, the following Problem 1 can be avoided: When the included angle of the inner screen is unfolded to the preset angle 5 (for example, 10°), after the electronic device triggers the inner screen to be turned on and the outer screen to be turned off, the electronic device also triggers, based on the folded state, the inner screen to be turned off and the outer screen to be turned on in a range from the preset angle 5 (for example, 10°) to the preset angle 3 (for example, 45°). In this way, the user sees screen switching in a short time, but the user intends to unfold the electronic device. In this case, that the inner screen is turned off and the outer screen is turned on does not conform to the expectation of the user. Screen switching refers to performing screen-on controlling based on a device form in the non-screen-off state. For example, when the inner screen is on and the outer screen is off, when the electronic device is closed to cause the device form to be the folded state, the operation of controlling the inner screen to be turned off and the outer screen to be turned on may be referred to as screen switching. For another example, when the inner screen is off and the outer screen is on, when the electronic device is unfolded to cause the device form to be the unfolded state, the operation of controlling the inner screen to be turned on and the outer screen to be turned off may be referred to as screen switching.

**Manner 2:** In Special case 2, after the attitude sensor determines that the attitude event B is the folded state, when it is determined that the included angle of the inner screen in the folded state is less than a preset angle 7 (for example, 4°), the attitude sensor may report the attitude event B. In this case, the electronic device may determine the device form of the electronic device based on the attitude event B, and perform screen-on controlling (control the inner screen to be turned off and the outer screen to be turned on) based on the device form. When it is determined that the included angle of the inner screen in the folded state is greater than or equal to the preset angle 7 (for example, 4°), the attitude event B may not be reported. In this case, the electronic device may not perform screen-on controlling based on the attitude event B. The preset angle 7 is less than or equal to the preset angle 5 (for example, 10°). In this way, Problem 1 described above can be resolved, and Problem 2 can also be resolved: When the Hall sensor fails, there is a false positive of the far-away state now (which is actually the approaching state, where the user may not expect to unfold the electronic device). In this way, after the electronic device triggers the inner screen to be turned on and the outer screen to be turned off, the electronic device can trigger, based on the folded state reported by the attitude sensor, the inner screen to be turned off and the outer screen to be turned on in time. The preset angle 7 (for example, 4°) is obtained based on the attitude sensor.

Based on Preset rule 1 and Preset rule 2 described above, compared with the solution in which only the Hall sensor is used to perform screen-on controlling, in some scenarios, the electronic device in embodiments of this application can implement more proper screen-on controlling.

In some possible cases, proper screen-on during unfolding or folding the electronic device involved in this application includes, but is not limited to the following scenarios.

Scenario 1: When the initial status of the electronic device is closed and both the inner screen and the outer screen are off, during unfolding the electronic device (from the folded state to the unfolded state), the electronic device triggers the inner screen to be turned on and the outer screen to be turned off as soon as possible (for example, the electronic device is unfolded to 10°). Scenario 1 may be implemented in the following manner: In Scenario 1, when both the inner screen and the outer screen are off, when the electronic device when closed is unfolded to cause the included angle of the inner screen to be greater than or equal to the preset angle 5 (for example, 10°), the Hall sensor may determine that the device form of the electronic device is the far-away state, and report the far-away state; and the electronic device determines, based on the far-away state, that the device form of the electronic device is the unfolded state, and triggers the inner screen to be turned on and keeps the outer screen off.

Scenario 2: When the initial status of the electronic device is unfolded and the inner screen or the outer screen is on, during closing the electronic device (from the unfolded state to the folded state), the electronic device triggers the inner screen to be turned off and the outer screen to be turned on as soon as possible (for example, the electronic device is folded to an angle greater than 10°, for example, 40°). Scenario 2 may be implemented in the following manner: In Scenario 2, when the inner screen or the outer screen is on, the attitude sensor is started. When the electronic device when unfolded is closed to cause the included angle of the inner screen to be less than or equal to the preset angle 2 (for example, 40°), the attitude sensor may determine that the device form of the electronic device is the folded state, and report the folded state; and the electronic device triggers, based on the folded state, the inner screen to be turned off and the outer screen to be turned on. Compared with the solution in which the Hall sensor is used to detect a form change of the electronic device in Scenario 2, it may be detected that the electronic device is in the folded state about 35° in advance (40° minus 5°), so that the electronic device can trigger the inner screen to be turned off and the outer screen to be turned on 35° in advance. In this way, it conforms to the expectation that the user expects the inner screen to be turned on and the outer screen to be turned off during closing the electronic device.

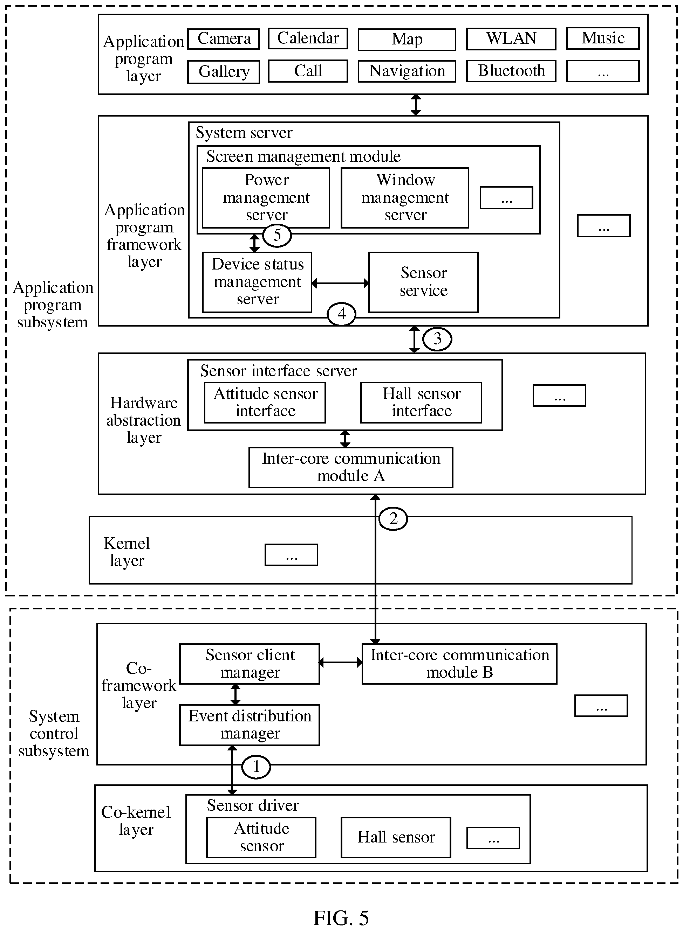

**FIG. 5** **is a block diagram of an example of a software structure when an electronic device performs screen-on controlling.**

With reference to FIG. 5, the following describes an interaction process of modules when the electronic device performs screen-on controlling based on device forms reported by a Hall sensor and an attitude sensor.

As shown in FIG. 5, the software structure includes at least one subsystem, for example, an application program subsystem and a system control subsystem. Different subsystems are classified into several layers, and each layer has a clear role and task. The layers communicate with each other through a software interface.

In some embodiments, the application program subsystem may include an application program layer, an application program framework layer, a hardware abstraction layer, and a kernel layer. The system control subsystem may include a framework layer and a kernel layer. For ease of differentiation, the framework layer in the system control subsystem may be referred to as a co-framework layer, and the kernel layer in the system control subsystem may be referred to as a co-kernel layer. It should be understood that, in actual application, in addition to the layers shown in FIG. 5, the application program subsystem and the system control subsystem may further include more or fewer layers. This is not limited in embodiments of this application.

The application program layer in the application program subsystem may include a series of application program packages. For example, the application program layer may include application packages such as camera, calendar, WLAN, music, gallery, call, navigation, and Bluetooth.

The application program framework layer provides an application programming interface (application programming interface, API) and a programming framework for an application program at the application program layer. The application program framework layer includes some predefined functions.

The application program framework layer in the application program subsystem may include a system server. The system server may include a screen management module, a device status management server, a sensor service, and the like.

The screen management module may include a power management server, a window management server, and the like. Each module in the screen management module may be configured to receive a notification of turning on a screen sent by the device status management server. The notification is for triggering the screen management module to start a screen-on procedure. In some possible cases, the power management server may be configured to control power on and power down of a screen. The window management server may be configured to draw a display window, and place, after the screen is powered on, the display window in the screen for a user to view.

After the attitude sensor and the Hall sensor are registered with the sensor service, the device status management server may be configured to receive an attitude event reported by the attitude sensor and a Hall event reported by the Hall sensor; then determine a final device form of the electronic device based on the attitude event and the Hall event; and make a decision to perform screen-on controlling based on the device form, to trigger the screen management module to start a screen-on procedure.

The sensor service may be configured to report the received attitude event and Hall event to the device status management server.

The hardware abstraction layer is an interface layer between the kernel layer and a hardware layer (not shown), to abstract hardware and provide a virtual hardware platform for an operating system.

The hardware abstraction layer may include a sensor interface service, an inter-core communication module A, and the like.

The sensor interface service may be configured to register sensors and receive data sent by the sensors after registration. For example, the sensor interface service may include an attitude sensor interface and a Hall sensor interface. The attitude sensor interface may be configured to manage registration of the attitude sensor, receive the attitude event uploaded by the attitude sensor, and send the attitude event to the sensor service. The Hall sensor interface may be configured to manage registration of the Hall sensor, receive the Hall event uploaded by the Hall sensor, and send the Hall event to the sensor service.

The inter-core communication module A may be configured to manage communication between the application program subsystem and the system control subsystem, so that the system control subsystem and the application program subsystem can transmit data to each other. For example, the inter-core communication module A receives the attitude event or the Hall event transmitted by the system control subsystem.

The co-framework layer in the system control subsystem may include an event distribution manager, a sensor client manager, an inter-core communication module B, and the like.

The event distribution manager may be configured to receive data uploaded by the co-kernel layer, and distribute the data to other modules registered with the event distribution manager. For example, the event distribution manager may be configured to receive the attitude event reported by the attitude sensor, and then transmit the attitude event to the sensor client manager. The event distribution manager may be further configured to receive the Hall event reported by the Hall sensor, and then transmit the Hall event to the sensor client manager.

After registered with the event distribution manager, the sensor client manager may be configured to obtain data uploaded by the event distribution manager, including, for example, the attitude event and the Hall event.

The inter-core communication module B may be configured to manage communication between the application program subsystem and the system control subsystem, so that the system control subsystem and the application program subsystem can transmit data to each other. For example, the inter-core communication module B may be configured to receive the attitude event, the Hall event, and the like transmitted by the sensor client manager, and transmit data such as the attitude event and the Hall event to the inter-core communication module A.

A sensor driver may be configured to start a sensor, for example, the attitude sensor, or the Hall sensor. After the attitude sensor is started, an attitude event may be obtained and reported. For example, a first frame of attitude event is reported to the event distribution manager. Subsequently, if a current frame of attitude event is different from a previous frame of attitude event, the current frame of attitude event may also be reported to the event distribution manager. After the Hall sensor is started, a Hall event may be obtained and reported. For example, a first frame of Hall event is reported to the event distribution manager. Subsequently, if a current frame of Hall event is different from a previous frame of Hall event, the current frame of Hall event may also be reported to the event distribution manager.

In some possible cases, that the attitude sensor and the Hall sensor report data may further include: The attitude sensor and the Hall sensor may respectively report the attitude event and the Hall event to the device status management server through a transmission path from Step 1 to Step 4 (that is, a path indicated by a white circle 1 to a white circle 4) in FIG. 5. Then, the device status management server performs Step 5 (a white circle 5 in the figure): determining the final device form of the electronic device based on the attitude event and the Hall event, and then making the decision to perform screen-on controlling based on the device form, to trigger the screen management module to start the screen-on procedure.

It should be understood that, FIG. 5 is a block diagram of an example of software of an electronic device, and does not constitute a limitation on embodiments of this application. For example, positions (for example, layers to which the modules belong) of the modules may be different in actual application. The attitude sensor is used as an example for description. When the attitude sensor is a virtual sensor based on a software algorithm, the attitude sensor may be run on the application program subsystem side or the system control subsystem side. The system control subsystem may also be referred to as a co-processor subsystem.

**In some possible embodiments (Embodiment 1), the electronic device may determine, based on Preset rule 1 described above, a change of the device form of the electronic device by using the Hall sensor and the attitude sensor, to implement proper screen-on based on the device form. In this embodiment, the attitude sensor is main, and the Hall sensor is auxiliary: In addition to Special case 1 described above, in this embodiment, in the non-screen-off state (in which the inner screen is on and/or the outer screen is on), the device form of the electronic device is determined based on the attitude event reported by the attitude sensor; and in the screen-off state (in which both the inner screen and the outer screen are off), the device form of the electronic device is determined based on the attitude event reported by the Hall sensor. Special case 1 includes: During unfolding the electronic device when closed (in the screen-off state), when the electronic device is unfolded to cause the included angle of the inner screen to be greater than or equal to the preset angle 5 (for example, 10°), the inner screen is turned on based on the Hall sensor, and then the attitude sensor is started. However, when a first frame of attitude event reported by the attitude sensor is the folded state, the electronic device does not process the first frame of attitude event within the preset time T (for example, 1s). After the preset time T is reached, the device form of the electronic device is determined based on an attitude event most recently reported by the attitude sensor.**

In this embodiment, in the screen-off state (in which both the inner screen and the outer screen are off), the electronic device closes the attitude sensor; and in the non-screen-off state (in which the inner screen is on and/or the outer screen is on), the electronic device starts the attitude sensor. The Hall sensor is started after the electronic device is powered on.

For detail descriptions of Preset rule 1, refer to the foregoing content. Details are not described herein again.

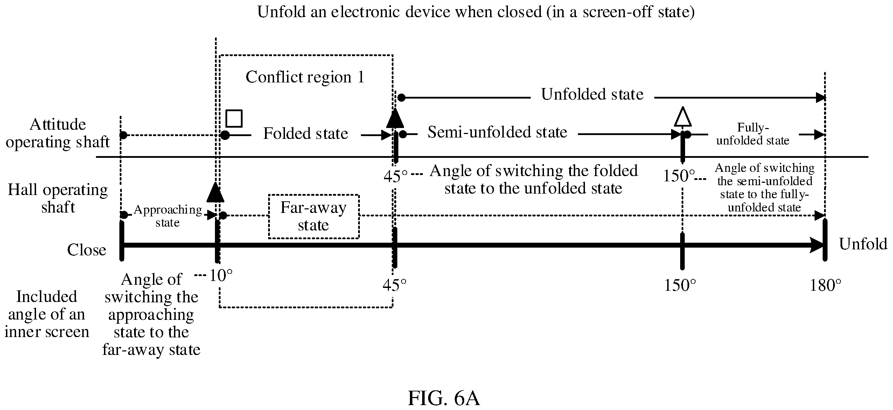

FIG. 6A to FIG. 6D are schematic diagrams of performing screen-on controlling based on Preset rule 1.

In FIG. 6A to FIG. 6D, an angle of "switching the fully-unfolded state to the semi-unfolded state" (for example, 145°) may be considered as a preset angle 1, an angle of "switching the unfolded state to the folded state" (for example, 40°) may be considered as a preset angle 2, an angle of "switching the folded state to the unfolded state" (for example, 45°) may be considered as a preset angle 3, an angle of "switching the semi-unfolded state to the fully-unfolded state" (for example, 150°) may be considered as a preset angle 4, an angle of "switching the approaching state to the far-away state" (for example, 10°) may be considered as a preset angle 5, and an angle of "switching the far-away state to the approaching state" (for example, 5°) may be considered as a preset angle 6.

With reference to FIG. 6A to FIG. 6D, the following describes examples of related content of performing screen-on controlling in different cases in Embodiment 1. Descriptions are specifically made from the following cases.

**Case 11:** Determine that the initial status is closed and is the screen-off state, and unfold the electronic device when closed (in the screen-off state). That the initial status of the electronic device is closed includes: The included angle of the inner screen is less than the angle of "switching the approaching state to the far-away state" (for example, 10°) before the electronic device is unfolded. For example, the included angle of the inner screen approaches 0° or is equal to 0°. The screen-off state means that both the inner screen and the outer screen of the electronic device are off.

As shown in FIG. 6A, in Case 11, the initial status of the electronic device is the screen-off state. In this case, the attitude sensor is not started. Therefore, the attitude sensor does not operate. In this case, in a process of unfolding the electronic device, a first involved device form is determined based on the Hall sensor. For example, refer to a Hall operating shaft in FIG. 6A. It can be learned that, in the process of unfolding the electronic device, when the included angle of the inner screen is an angle ranging from 0° to the angle of "switching the approaching state to the far-away state", the Hall sensor may obtain the device form (which is the close state in this case) of the electronic device.

Subsequently, when the electronic device is continuously unfolded to cause the included angle of the inner screen to reach (be greater than or equal to) the angle of "switching the approaching state to the far-away state" (for example, a black triangle in the Hall operating shaft), the Hall sensor may determine that the device form of the electronic device is the far-away state, and report the far-away state as a Hall event. Then, the electronic device maps the far-away state to the unfolded state, and in this case, triggers the inner screen to be turned on and the outer screen to be turned off. In this case, the electronic device may further start the attitude sensor. Refer to the attitude operating shaft. The attitude sensor is started after the included angle of the inner screen reaches the angle of "switching the approaching state to the far-away state". In a process in which the included angle of the inner screen ranges from the angle of "switching the approaching state to the far-away state" to the angle of "switching the folded state to the unfolded state", an attitude event obtained by the attitude sensor is the folded state, and conflicts with the unfolded state mapped to by the far-away state reported by the Hall sensor. Therefore, for the included angle of the inner screen, angles ranging from the angle of "switching the approaching state to the far-away state" to the angle of "switching the folded state to the unfolded state" are also referred to as a conflict region (conflict region 1). When the electronic device is unfolded to cause the included angle of the inner screen to be in the conflict region 1, if the attitude sensor reports an attitude event (attitude event A), in this case, the attitude event A is the folded state, and the electronic device may not process the attitude event A within the preset time T. After the preset time T is reached, the device form of the electronic device is determined based on an attitude event most recently reported by the attitude sensor. An example of a position at which the attitude sensor reports the attitude event A may be a position of a white square in the attitude operating shaft.

The most recently reported attitude event may include a plurality of results. In different results, the electronic device performs screen-on controlling in different manners. For details, refer to the following descriptions.

Result 11: The most recently reported attitude event is still the attitude event A. In this case, the electronic device determines, based on the attitude event A, that the electronic device is in the folded state, and the electronic device may trigger the inner screen to be turned off and the outer screen to be turned on. In Result 11, in the process of unfolding the electronic device, after the electronic device triggers the inner screen to be turned on when the included angle of the inner screen is unfolded to be greater than or equal to the angle of "switching the approaching state to the far-away state" (for example, 10°), the electronic device further switches to cause the outer screen to be turned on when the included angle of the inner screen is unfolded to the angle of "switching the folded state to the unfolded state" (for example, 45°). There is a possibility that the expectation of the user is not conformed to. Generation of Result 11 may be avoided in Preset rule 2 involved subsequently. For details, refer to descriptions of the following related content. Details are not described herein again.

Result 12: The most recently reported attitude event is not the attitude event A, and may be another attitude event. The another attitude event may be the unfolded state (including the semi-unfolded state and the fully-unfolded state). For example, when the included angle of the inner screen is unfolded to be greater than or equal to the angle of "switching the folded state to the unfolded state" (for example, 45°), the another attitude event reported by the attitude sensor may be the semi-unfolded state. An example of a position at which the another attitude event is reported may be a position of a black triangle in the attitude operating shaft. For another example, when the included angle of the inner screen is unfolded to be greater than or equal to the angle of "switching the semi-unfolded state to the fully-unfolded state" (for example, 150°), the another attitude event reported by the attitude sensor may be the fully-unfolded state. An example of a position at which the another attitude event is reported may be a position of a white triangle in the attitude operating shaft. In Result 12, in the process of unfolding the electronic device, after the electronic device triggers the inner screen to be turned on when the included angle of the inner screen is unfolded to be greater than or equal to the angle of "switching the approaching state to the far-away state" (for example, 10°), the electronic device does not trigger a switch to cause the outer screen to be turned on in the process of continuously unfolding the electronic device, thereby conforming to the expectation of the user.

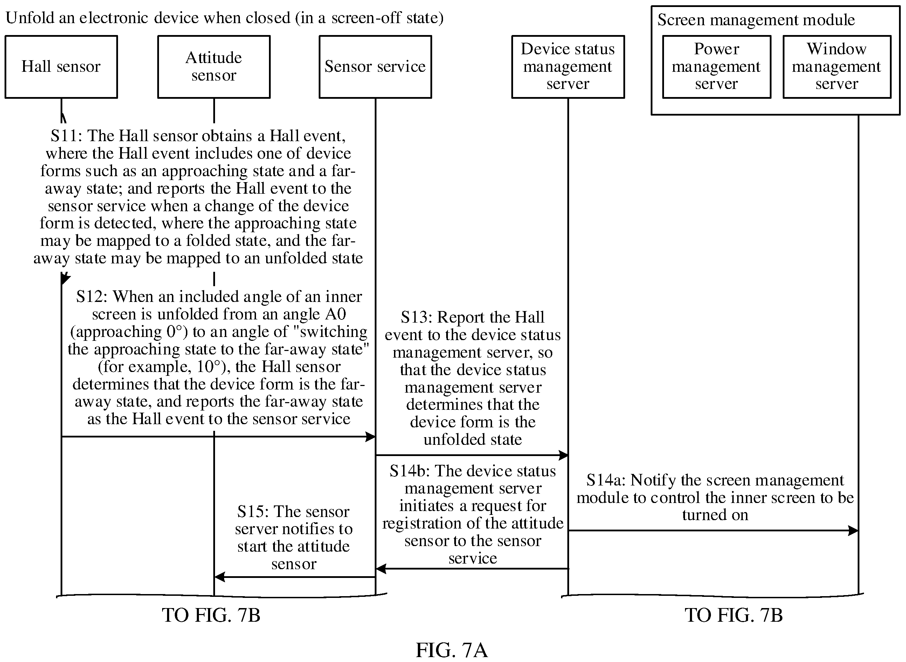

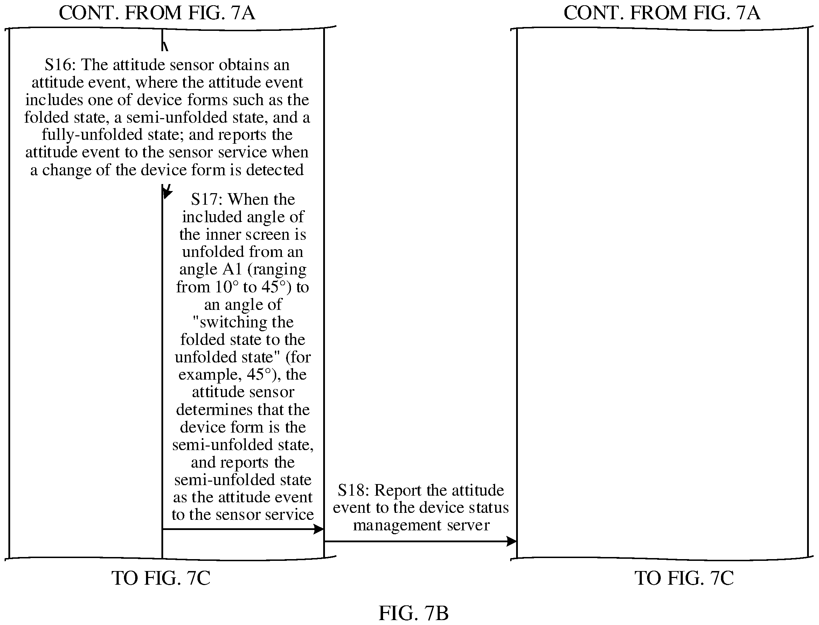

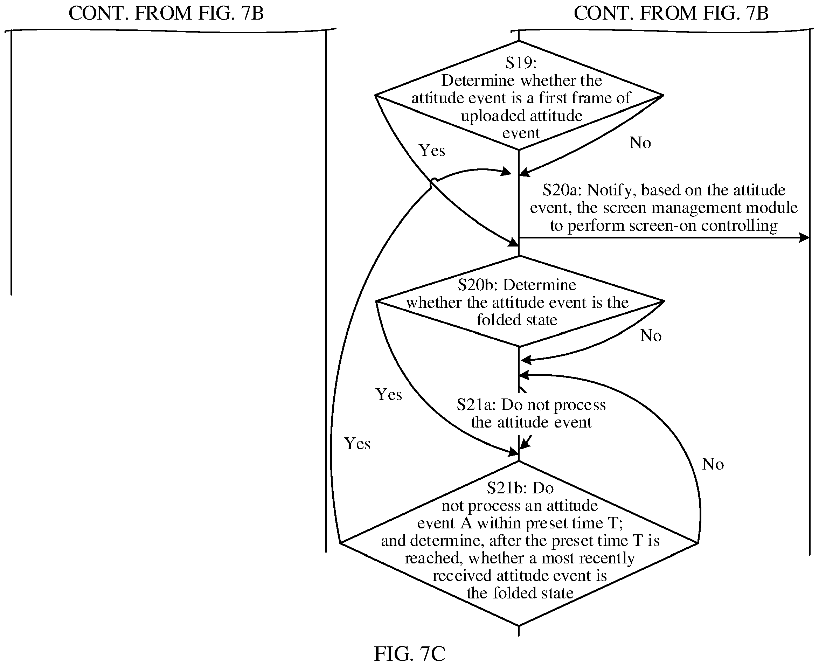

For a procedure in which the electronic device performs screen-on controlling in Case 11, refer to the following descriptions of FIG. 7A to FIG. 7C. Details are not described herein again.

**Case 12:** Determine that the initial status is closed (the non-screen-off state), and unfold the electronic device when closed (in the non-screen-off state). That the initial status of the electronic device is closed includes: The included angle of the inner screen is less than the angle of "switching the approaching state to the far-away state" (for example, 10°) before the electronic device is unfolded. For example, the included angle of the inner screen approaches 0° or is equal to 0°. The non-screen-off state means that at least one of the inner screen or the outer screen of the electronic device is on.

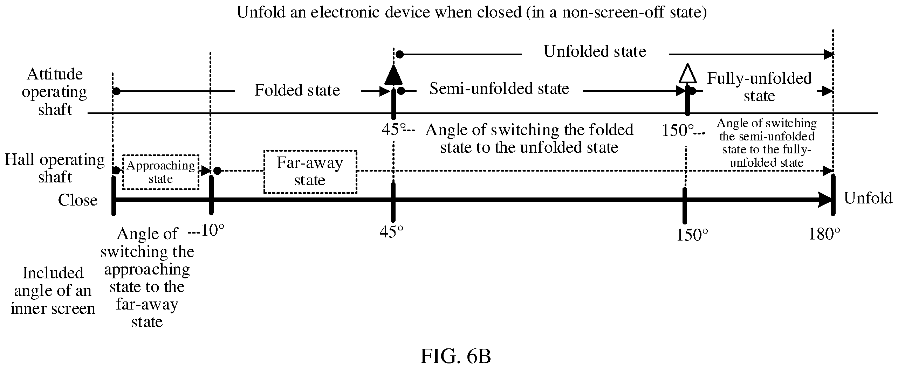

As shown in FIG. 6B, in Case 12, the initial status of the electronic device is the non-screen-off state. In this case, the attitude sensor is started, and the device form of the electronic device is determined based on an attitude event reported by the attitude sensor. When the attitude sensor is started, the electronic device does not process a Hall event reported by the Hall sensor (therefore, a Hall operating shaft in FIG. 6B is indicated by a dashed line). In this case, refer to an attitude operating shaft. During unfolding the electronic device, when the included angle of the inner screen is unfolded to be greater than or equal to the angle of "switching the folded state to the unfolded state" (for example, 45°), the attitude sensor may report one frame of semi-unfolded state, and the electronic device turns on, based on the semi-unfolded state, the inner screen and turns off the outer screen. An example of a position at which the semi-unfolded state is reported may be a position of a black triangle in the attitude operating shaft. Subsequently, during continuously unfolding the electronic device, when the included angle of the inner screen is unfolded to be greater than or equal to the angle of "switching the semi-unfolded state to the fully-unfolded state" (for example, 150°), the attitude sensor may report one frame of fully-unfolded state, and the electronic device keeps, based on the fully-unfolded state, the inner screen on and the outer screen off. An example of a position at which the fully-unfolded state is reported may be a position of a white triangle in the attitude operating shaft.

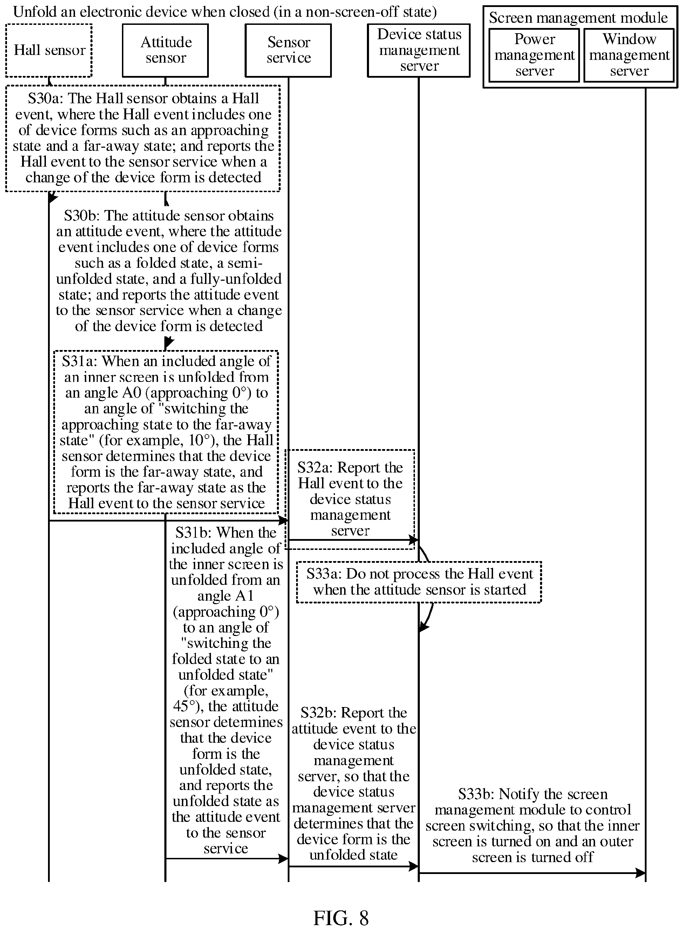

For a procedure in which the electronic device performs screen-on controlling in Case 12, refer to the following descriptions of FIG. 8. Details are not described herein again.

**Case 13:** Determine that the initial status is unfolded (the non-screen-off state), and close the electronic device when unfolded (in the non-screen-off state). That the initial status of the electronic device is unfolded includes: The device form of the electronic device is the unfolded state before the electronic device is closed, and the included angle of the inner screen is generally greater than the angle of "switching the unfolded state to the folded state". For example, when the included angle of the inner screen is 180° or approaches 180°, the device form may be the unfolded state. The non-screen-off state means that at least one of the inner screen or the outer screen of the electronic device is on.

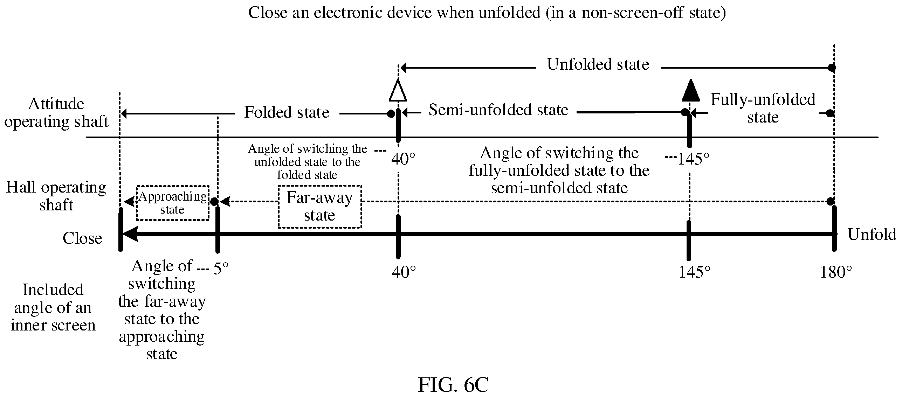

As shown in FIG. 6C, in Case 13, the initial status of the electronic device is the non-screen-off state. In this case, the attitude sensor is started, and the device form of the electronic device is determined based on an attitude event reported by the attitude sensor. When the attitude sensor is started, the electronic device does not process a Hall event reported by the Hall sensor (therefore, a Hall operating shaft in FIG. 6C is indicated by a dashed line). In this case, refer to an attitude operating shaft. During closing the electronic device, when the included angle of the inner screen is closed to be less than or equal to the angle of "switching the fully-unfolded state to the semi-unfolded state" (for example, 145°), the attitude sensor may report one frame of semi-unfolded state, and the electronic device determines, based on the semi-unfolded state, that the electronic device is still in the unfolded state. An example of a position at which the fully-unfolded state is reported may be a position of a black triangle in the attitude operating shaft. Subsequently, during continuously closing the electronic device, when the included angle of the inner screen is closed to be less than or equal to the angle of "switching the unfolded state to the folded state" (for example, 40°), the attitude sensor may report one frame of folded state, and the electronic device turns off, based on the folded state, the inner screen and turns on the outer screen. An example of a position at which the folded state is reported may be a position of a white triangle in the attitude operating shaft.

It should be understood that, refer to FIG. 6B and FIG. 6C. the angle of "switching the folded state to the unfolded state" (for example, 45°) and the angle of "switching the unfolded state to the folded state" (for example, 40°) need to approach as much as possible, and a difference between the two angles is generally not greater than 10°, for example, may be 5°. In this way, during unfolding the electronic device in the non-screen-off state and during closing the electronic device in the non-screen-off state, the electronic device can obtain a same device form at approximate included angles of the inner screen by using the attitude sensor, thereby facilitating implementation of other functions.

**Case 14:** Determine that the initial status is unfolded (the screen-off state), and close the electronic device when unfolded (in the screen-off state). That the initial status of the electronic device is unfolded includes: The device form of the electronic device is the unfolded state before the electronic device is closed, and the included angle of the inner screen is generally greater than 45°. For example, when the included angle of the inner screen is 180° or approaches 180°, the device form may be the unfolded state. The screen-off state means that both the inner screen and the outer screen of the electronic device are off.

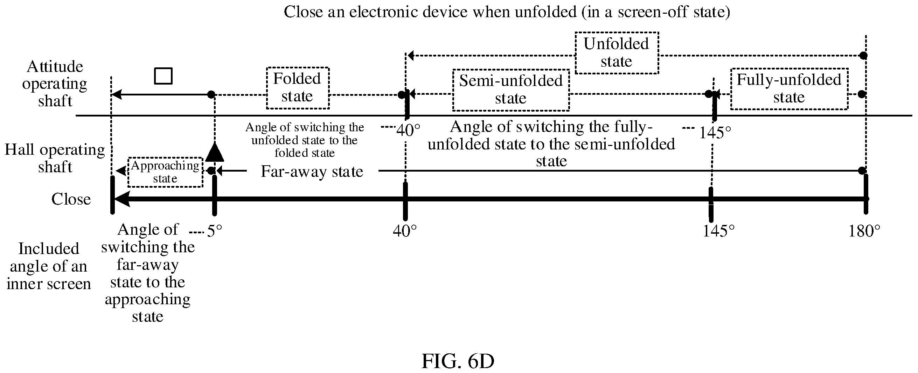

As shown in FIG. 6D, in Case 14, the initial status of the electronic device is the screen-off state. In this case, the attitude sensor is not started. Therefore, the attitude sensor does not operate. Therefore, in a process of closing the electronic device, a first involved device form is determined based on the Hall sensor. For example, refer to a Hall operating shaft in FIG. 6D. It can be learned that, when the included angle of the inner screen is an angle ranging from 180° to the angle of "switching the far-away state to the approaching state", the Hall sensor may obtain the device form (which is the far-away state in this case) of the electronic device, but does not report the far-away state. Subsequently, when the electronic device is closed to cause the included angle of the inner screen to be less than or equal to the angle of "switching the far-away state to the approaching state", the Hall sensor may obtain the device form (which is the approaching state in this case) of the electronic device, and report the approaching state. Then, the electronic device maps the approaching state to the folded state, and keeps both the inner screen and the outer screen off. When both the inner screen and the outer screen are off, in response to a screen-on operation, the electronic device may implement screen-on. After the screen-on, the attitude sensor is started. The screen-on operation includes an operation for a power key, an unlocking operation, and the like.

In some other possible cases, in Case 14, when the included angle of the inner screen is closed to be less than or equal to the angle of "switching the far-away state to the approaching state" (for example, 5°), the Hall sensor reports a Hall event. In this case, the Hall event is the approaching state. After mapping the approaching state to the folded state, the electronic device may also trigger the outer screen to be turned on and keep the inner screen off. In addition, the electronic device may further start the attitude sensor. After the attitude sensor is started, a position at which a first frame of attitude event is reported may be a position of a white square in the figure. The first frame of attitude event is the folded state, which is the same as a device state after the approaching state reported by the Hall sensor is folded. In this case, the electronic device keeps the inner screen off and the outer screen on. A position at which the Hall sensor reports the folded state may be a position of a black triangle in the figure.

**FIG. 7A to FIG. 7C** **show an interaction procedure of modules when an electronic device performs screen-on controlling in Case 11.**

With reference to FIG. 7A to FIG. 7C, the following describes in detail a process of performing screen-on controlling during unfolding the electronic device when the initial status is closed (in the screen-off state). Main modules involved in the process include the Hall sensor, the attitude sensor, a sensor service, a device status management server, and a screen management module. For the process, refer to descriptions of Step S11 to Step S21b.

S11: The Hall sensor obtains a Hall event, where the Hall event includes one of device forms such as the approaching state and the far-away state; and reports the Hall event to the sensor service when a change of the device form is detected, where the approaching state may be mapped to the folded state, and the far-away state may be mapped to the unfolded state.

S12: When the included angle of the inner screen is unfolded from an angle A0 (approaching 0°) to the angle of "switching the approaching state to the far-away state" (for example, 10°), the Hall sensor determines that the device form is the far-away state, and reports the far-away state as the Hall event to the sensor service.

S13: Report the Hall event to the device status management server, so that the device status management server determines that the device form is the unfolded state.

S14a: The device status management server notifies the screen management module to control the inner screen to be turned on.

In this way, as shown in FIG. 6A, when the electronic device is unfolded to the angle of "switching the approaching state to the far-away state" (for example, 10°), the screen management module may control, through modules such as a power management server and a window management server, the inner screen to be turned on. In this case, the outer screen is kept off. For a position at which the electronic device is unfolded to the angle of "switching the approaching state to the far-away state" (for example, 10°), refer to a position of the black triangle in the Hall operating shaft.

S14b: The device status management server initiates a request for registration of the attitude sensor to the sensor service.

It should be understood that, Step S14a and Step S14b may be steps performed after the device status management server determines that the device form is the unfolded state. Execution orders of Step S14a and Step S14b are not limited. Generally, Step S14a and Step S14b may be performed concurrently.

S15: The sensor service notifies to start the attitude sensor.

S16: The attitude sensor obtains an attitude event, where the attitude event includes one of device forms such as the folded state, the semi-unfolded state, and the fully-unfolded state; and reports the attitude event to the sensor service when a change of the device form is detected.

S17: When the included angle of the inner screen is unfolded from an angle A1 (ranging from 10° to 45°) to the angle of "switching the folded state to the unfolded state" (for example, 45°), the attitude sensor determines that the device form is the semi-unfolded state, and reports the semi-unfolded state as the attitude event to the sensor service.

S18: The sensor service reports the attitude event to the device status management server.

S19: The device status management server determines whether the attitude event is a first frame of uploaded attitude event.

That the attitude event is the first frame of attitude event indicates that the frame of attitude event is a first frame of attitude event obtained after the attitude sensor is started.

When the attitude event is not the first frame of uploaded attitude event, Step S20a is performed.

When the attitude event is the first frame of uploaded attitude event, Step S20b is performed.

S20a: The device status management server notifies, based on the attitude event, the screen management module to perform screen-on controlling.

When the attitude event is the folded state, the device status management server may control screen switching: triggering the inner screen to be turned off and the outer screen to be turned on. For an example involved in the case, refer to the foregoing descriptions of Result 11. In this case, the attitude event is the folded state and the first frame of attitude event, and it indicates that the user unfolds the electronic device at a slow speed. Therefore, after the inner screen is turned on, the electronic device further triggers the inner screen to be turned off and the outer screen to be turned on. Another example involved in the case includes: After the user unfolds the electronic device to cause the included angle of the inner screen to be greater than or equal to the angle of "switching the folded state to the unfolded state" (for example, 45°), the user further starts to close the electronic device to cause the included angle of the inner screen to be less than or equal to the angle of "switching the unfolded state to the folded state" (for example, 40°).

When the attitude event is the unfolded state, it indicates that the event reported by the attitude sensor does not conflict with the event reported by the Hall sensor. The device status management server may not process the attitude event, and continuously keeps the inner screen on and the outer screen off. For the case, refer to the foregoing descriptions of Result 12.

S20b: The device status management server determines whether the attitude event is the folded state.

When the attitude event is not the folded state, Step S21a is performed.

When the attitude event is the folded state, Step S21b is performed.

S21a: The device status management server does not process the attitude event.

When the attitude event is the unfolded state, it indicates that the event reported by the attitude sensor does not conflict with the event reported by the Hall sensor. The device status management server may not process the attitude event, and continuously keeps the inner screen on and the outer screen off. For the case, refer to the foregoing descriptions of Result 12.

S21b: The device status management server does not process the attitude event A within the preset time T; and determines, after the preset time T is reached, whether a most recently received attitude event is the folded state.

When the most recently received attitude event is not the folded state, Step S21a is performed.

When the most recently received attitude event is the folded state, Step S20a is performed.

**FIG. 8** **shows an interaction procedure of modules when an electronic device performs screen-on controlling in Case 12.**

With reference to FIG. 8, the following describes in detail a process of performing screen-on controlling during unfolding the electronic device when the initial status is closed (in the non-screen-off state). Main modules involved in the process include the attitude sensor, a sensor service, a device status management server, and a screen management module. Step S30a, Step S31a, Step S32a, and Step S33a are placed in dashed boxes, to indicate that the attitude sensor is started when the electronic device is in the non-screen-off state, and in this case, although the Hall sensor reports a Hall event, the device status management server does not process the Hall event. For the process, refer to descriptions of Step S30a to Step S33b.

S30a: The Hall sensor obtains a Hall event, where the Hall event includes one of device forms such as the approaching state and the far-away state; and reports the Hall event to the sensor service when a change of the device form is detected.

S31a: When the included angle of the inner screen is unfolded from an angle A0 (approaching 0°) to the angle of "switching the approaching state to the far-away state" (for example, 10°), the Hall sensor determines that the device form is the far-away state, and reports the far-away state as the Hall event to the sensor service.

S32a: Report the Hall event to the device status management server.

S33a: Do not process the Hall event when the attitude sensor is started.

S30b: The attitude sensor obtains an attitude event, where the attitude event includes one of device forms such as the folded state, the semi-unfolded state, and the fully-unfolded state; and reports the attitude event to the sensor service when a change of the device form is detected.

It should be understood that, execution time of Step S30b and execution time of Step S30a are not limited.

S31b: When the included angle of the inner screen is unfolded from an angle A1 (approaching 0°) to the angle of "switching the folded state to the unfolded state" (for example, 45°), the attitude sensor determines that the device form is the unfolded state, and reports the unfolded state as the attitude event to the sensor service.

S32b: Report the attitude event to the device status management server, so that the device status management server determines that the device form is the unfolded state.

S33b: Notify the screen management module to control screen switching, so that the inner screen is turned on and the outer screen is turned off.

It should be understood that, an interaction procedure of modules when the electronic device performs screen-on controlling in Case 13 is similar to the interaction procedure of the modules when the electronic device performs screen-on controlling in Case 12. A difference is that occasions at which the attitude sensor reports attitude events are different. Refer to the foregoing descriptions of related content in FIG. 8. Details are not described herein again. An interaction procedure of modules when the electronic device performs screen-on controlling in Case 14 is similar to the interaction procedure of the modules when the electronic device performs screen-on controlling in Case 12. A difference is that the attitude sensor is not started in the screen-off state, and in this case, content of the attitude sensor is not involved. In Case 14, the device form may be determined based on a Hall event reported by the Hall sensor. For other same things, refer to the foregoing descriptions of related content in FIG. 8. Details are not described herein again.

In some other possible embodiments (Embodiment 2), the electronic device may determine, based on Preset rule 2, a change of the device form of the electronic device by using the Hall sensor and the attitude sensor, to implement proper screen-on based on the device form. In this embodiment, the attitude sensor is of equal importance to the Hall sensor: In addition to Special case 2 described above, in this embodiment, when the attitude sensor reports an attitude event, the electronic device may determine the device form of the electronic device based on the attitude event, and perform screen-on controlling based on the device form; and when the Hall sensor reports a Hall event, the electronic device may determine the device form of the electronic device based on the Hall event, and perform screen-on controlling based on the device form. Special case 2 includes: During unfolding the electronic device when closed (in the screen-off state), when the electronic device is unfolded to **cause the first included angle to be** greater than or equal to the preset angle 5 (for example, 10°), the inner screen is turned on based on the Hall sensor, and then the attitude sensor is started. However, when a first frame of attitude event obtained by the attitude sensor is the folded state, the attitude event may not be reported, so that the electronic device can keep the inner screen on and the outer screen off. Alternatively, when the first frame of attitude event is the folded state and it is determined that the included angle of the inner screen is less than the preset angle 7 (for example, 4°), the attitude event may be reported, so that the electronic device may perform correction to cause the outer screen to be turned on and the inner screen to be turned off when the Hall sensor has a false positive of the far-away state (which is actually the approaching state).

In this embodiment, in the screen-off state (in which both the inner screen and the outer screen are off), the electronic device closes the attitude sensor; and in the non-screen-off state (in which the inner screen is on and/or the outer screen is on), the electronic device starts the attitude sensor. The Hall sensor is started after the electronic device is powered on.

For detail descriptions of Preset rule 2, refer to the foregoing content. Details are not described herein again.

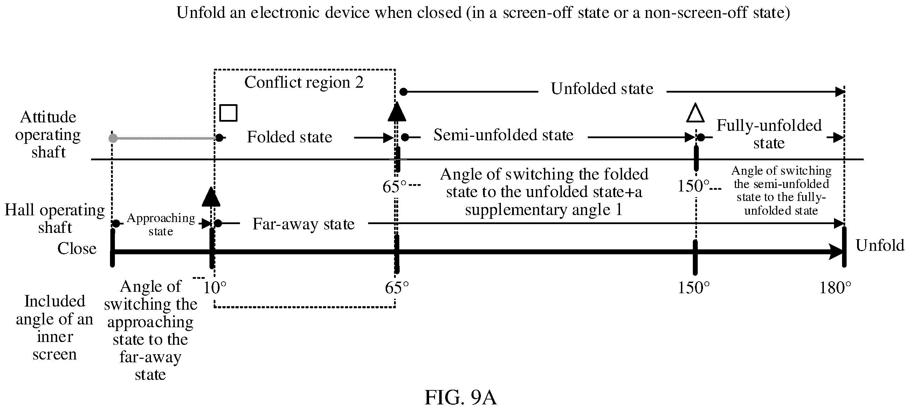

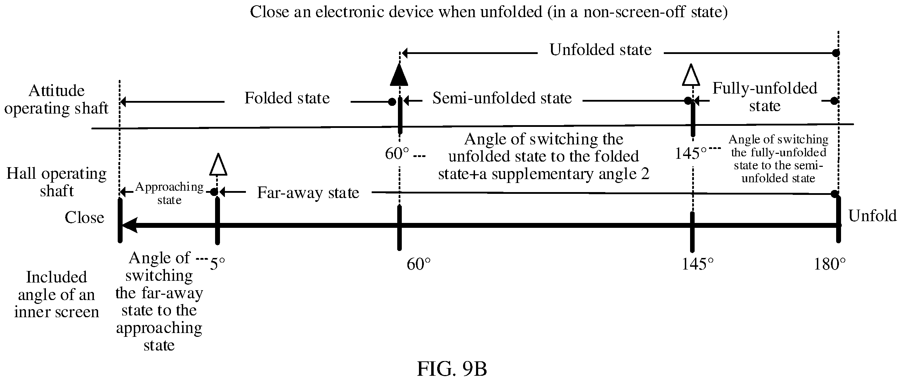

FIG. 9A and FIG. 9B are schematic diagrams of performing screen-on controlling based on Preset rule 2.

In FIG. 9A and FIG. 9B, an angle of "switching the fully-unfolded state to the semi-unfolded state" (for example, 145°) may be considered as a preset angle 1, "an angle of switching the unfolded state to the folded state+a supplementary angle 2" (for example, 60°) may be considered as a preset angle 2, "an angle of switching the folded state to the unfolded state+a supplementary angle 1" (for example, 65°) may be considered as a preset angle 3, an angle of "switching the semi-unfolded state to the fully-unfolded state" (for example, 150°) may be considered as a preset angle 4, an angle of "switching the approaching state to the far-away state" (for example, 10°) may be considered as a preset angle 5, and an angle of "switching the far-away state to the approaching state" (for example, 5°) may be considered as a preset angle 6.

"The angle of switching the folded state to the unfolded state+the supplementary angle 1" is a sum of the angle of "switching the folded state to the unfolded state" involved in Embodiment 1 and the supplementary angle 1. "The angle of switching the unfolded state to the folded state+the supplementary angle 2" is a sum of the angle of "switching the unfolded state to the folded state" involved in Embodiment 1 and the supplementary angle 2. The supplementary angle 1 and the supplementary angle 2 may be angles greater than 0°, for example, 20° or 30°, and may be adjusted according to actual requirements. This is not limited in embodiments of this application.

It should be understood that, the preset angle 3 involved in Embodiment 2 is greater than (different by the supplementary angle 1) the preset angle 3 involved in Embodiment 1. The reason is that in Embodiment 1, the far-away state reported by the Hall sensor is ignored in the non-screen-off state, and only when the electronic device is continuously unfolded to the angle of "switching the folded state to the unfolded state" (for example, 45°), the electronic device can trigger, based on the semi-unfolded state reported by the attitude sensor, the inner screen to be turned on and the outer screen to be turned off. Therefore, the angle of "switching the folded state to the unfolded state" is generally not excessively large. Otherwise, proper screen-on during unfolding the electronic device when closed is affected. In addition, the angle of "switching the folded state to the unfolded state" is also not excessively small. Otherwise, proper screen-on during closing the electronic device when unfolded (in the non-screen-off state) is affected. In a process of closing the electronic device when unfolded (in the non-screen-off state), when the electronic device is closed to cause the included angle of the inner screen to reach the angle of "switching the unfolded state to the folded state" (for example, 40°), the electronic device can trigger the inner screen to be turned off and the outer screen to be turned on. Therefore, the angle of "switching the folded state to the unfolded state" (for example, 45°) and the angle of "switching the unfolded state to the folded state" (for example, 40°) need to approach as much as possible. In this way, during unfolding the electronic device in the non-screen-off state and during closing the electronic device in the non-screen-off state, the electronic device can obtain a same device form at approximate included angles of the inner screen by using the attitude sensor, thereby facilitating implementation of other functions. Therefore, the angle of "switching the folded state to the unfolded state" may be taken to be around 45°. However, in Embodiment 2, during unfolding the electronic device when closed and in the non-screen-off state, when the electronic device is unfolded to cause the included angle of the inner screen to reach the angle of "switching the approaching state to the far-away state" (for example, 10°), in Embodiment 2, the electronic device may trigger, based on the far-away state reported by the Hall sensor, the inner screen to be turned on and the outer screen to be turned off; and does not need to trigger, based on the semi-unfolded state reported by the attitude sensor, the inner screen to be turned on and the outer screen to be turned off. Therefore, the preset angle 3 ("the angle of switching the folded state to the unfolded state+the supplementary angle 1") in Embodiment 2 may be set to be greater than the preset angle 3 (the angle of "switching the folded state to the unfolded state") in Embodiment 1. Because the preset angle 2 and the preset angle 3 need to approach as much as possible, the preset angle 2 in Embodiment 2 may also be greater than the preset angle 2 (for example, the angle of "switching the unfolded state to the folded state") in Embodiment 1. For example, the preset angle 2 in Embodiment 2 may be set to be "the angle of switching the unfolded state to the folded state+the supplementary angle 2". The supplementary angle 2 approaches the supplementary angle 1. Generally, the supplementary angle 2 may be the same as the supplementary angle 1. The supplementary angle 1 may be an angle greater than 0°, for example, 20° or 30°. This is not limited in embodiments of this application.

With reference to FIG. 9A and FIG. 9B, the following describes examples of related content of performing screen-on controlling in different cases in Embodiment 2. Descriptions are specifically made from the following cases.

Case 21: Determine that the initial status is closed (the screen-off state or the non-screen-off state), and unfold the electronic device when closed (the screen-off state or the non-screen-off state). That the initial status of the electronic device is closed includes: The included angle of the inner screen is less than the angle of "switching the approaching state to the far-away state" (for example, 10°) before the electronic device is unfolded. For example, the included angle of the inner screen approaches 0° or is equal to 0°. Regardless of a screen status when closed, during unfolding the electronic device, when the included angle of the inner screen reaches the angle of "switching the approaching state to the far-away state" (for example, 10°), the inner screen can be turned on and the outer screen can be turned off.

It should be understood that, when the initial status is closed (the screen-off state or the non-screen-off state), when the electronic device is unfolded to cause the included angle of the inner screen to reach the angle of "switching the approaching state to the far-away state" (for example, 10°), the inner screen is turned on and the outer screen is turned off. Involved content includes, but is not limited to some or all of the following content.

Content 11: When the initial status is closed and both the inner screen and the outer screen are off, when the electronic device is unfolded to cause the included angle of the inner screen to reach the angle of "switching the approaching state to the far-away state" (for example, 10°), the electronic device triggers the inner screen to be turned on and keeps the outer screen off.

Content 12: When the initial status is closed, and the inner screen is off and the outer screen is on, when the electronic device is unfolded to cause the included angle of the inner screen to reach the angle of "switching the approaching state to the far-away state" (for example, 10°), the electronic device triggers the inner screen to be turned on and the outer screen to be turned off.

Content 13: When the initial status is closed, and the inner screen is on and the outer screen is off, when the electronic device is unfolded to cause the included angle of the inner screen to reach the angle of "switching the approaching state to the far-away state" (for example, 10°), the electronic device keeps the inner screen on and the outer screen off.

Content 14: When the initial status is closed and both the inner screen and the outer screen are on, when the electronic device is unfolded to cause the included angle of the inner screen to reach the angle of "switching the approaching state to the far-away state" (for example, 10°), the electronic device keeps the inner screen on and triggers the outer screen to be turned off. In some embodiments, when closed, the inner screen is turned off.

As shown in FIG. 9A, when the initial status of the electronic device is closed (the screen-off state or the non-screen-off state), regardless of whether the attitude sensor does not operate in the screen-off state or operates in the non-screen-off state, when the electronic device is unfolded to cause the included angle of the inner screen to reach the angle of "switching the approaching state to the far-away state" (for example, 10°), the electronic device may map the far-away state reported by the Hall sensor to the unfolded state, so that the inner screen is turned on and the outer screen is turned off.

Refer to a Hall operating shaft in FIG. 9A. It can be learned that, in the process of unfolding the electronic device in the screen-off state or the non-screen-off state, when the included angle of the inner screen is an angle ranging from 0° to the angle of "switching the approaching state to the far-away state", the Hall sensor may obtain the device form (which is the close state in this case) of the electronic device. Subsequently, when the electronic device is continuously unfolded to cause the included angle of the inner screen to reach (be greater than or equal to) the angle of "switching the approaching state to the far-away state" (for example, a black triangle in the Hall operating shaft), the Hall sensor may determine that the device form of the electronic device is the far-away state, and report the far-away state as a Hall event. The electronic device maps the Hall event (far-away state) to the unfolded state, and triggers the inner screen to be turned on and keeps the outer screen off. An example of a position at which the Hall sensor reports the Hall event (far-away state) may be a position of a black triangle in the Hall operating shaft. In this case, if the initial status is closed and is the screen-off state, when the electronic device triggers the inner screen to be turned on and keeps the outer screen off, the attitude sensor may also be started. Refer to an attitude operating shaft. The attitude sensor is started after the included angle of the inner screen reaches the angle of "switching the approaching state to the far-away state". In a process in which the included angle of the inner screen ranges from the angle of "switching the approaching state to the far-away state" to "the angle of switching the folded state to the unfolded state+the supplementary angle 1", an attitude event obtained by the attitude sensor is the folded state, and conflicts with the unfolded state mapped to by the far-away state reported by the Hall sensor. Therefore, for the included angle of the inner screen, angles ranging from the angle of "switching the approaching state to the far-away state" to "the angle of switching the folded state to the unfolded state+the supplementary angle 1" are also referred to as a conflict region (conflict region 2). When the electronic device is unfolded to cause the included angle of the inner screen to be located in the conflict region 2, the attitude sensor may obtain a first frame of attitude event (attitude event B).

In this case, if the attitude event B is the semi-unfolded state or the unfolded state, the attitude sensor may report the attitude event B. The electronic device may not process the attitude event B (the semi-unfolded state or the unfolded state), and still keeps the inner screen on and the outer screen off. An example of a position at which the attitude sensor reports the semi-unfolded state may be a position of a black triangle in the attitude operating shaft. An example of a position at which the attitude sensor reports the fully-unfolded state may be a position of a white triangle in the attitude operating shaft, for example, when the included angle of the inner screen is unfolded to the angle of "switching the semi-unfolded state to the fully-unfolded state".

If the attitude event B is the folded state, the attitude event B conflicts with the unfolded state mapped to by the far-away state reported by the Hall sensor. A manner in which the electronic device handles the conflict includes Manner 1 and Manner 2 described above.

**Manner 1:** After the attitude sensor determines that the attitude event B is the folded state, the attitude event B may not be reported. In this case, the electronic device may not perform screen-on controlling based on the attitude event B, and still keeps the inner screen on and the outer screen off. For detail descriptions of Manner 1, refer to the foregoing descriptions of Manner 1. Details are not described herein again. An example of a position at which the attitude sensor obtains but does not report the attitude event B may be a position of a white square in the attitude operating shaft.

**Manner 2:** After the attitude sensor determines that the attitude event B is the folded state, when it is determined that the included angle of the inner screen in the folded state is less than the preset angle 7 (for example, 4°), the attitude sensor may report the attitude event B. In this case, the electronic device may determine, based on the attitude event B, that the device form of the electronic device is the folded state, and trigger the inner screen to be turned off and the outer screen to be turned on. For detail descriptions of Manner 2, refer to the foregoing descriptions of Manner 2. Details are not described herein again.

Subsequently, the attitude sensor may continuously obtain an attitude event (for example, a second frame of attitude event), and report the subsequently obtained attitude event. In addition, the Hall sensor may also report a Hall event. The electronic device performs screen-on controlling based on the reported event (the attitude event or the Hall event).

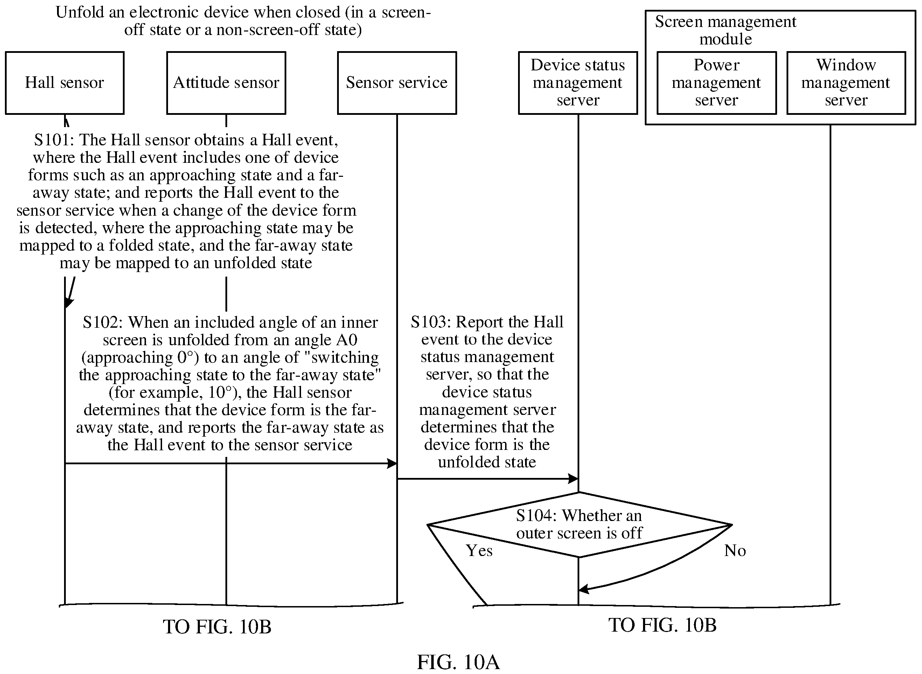

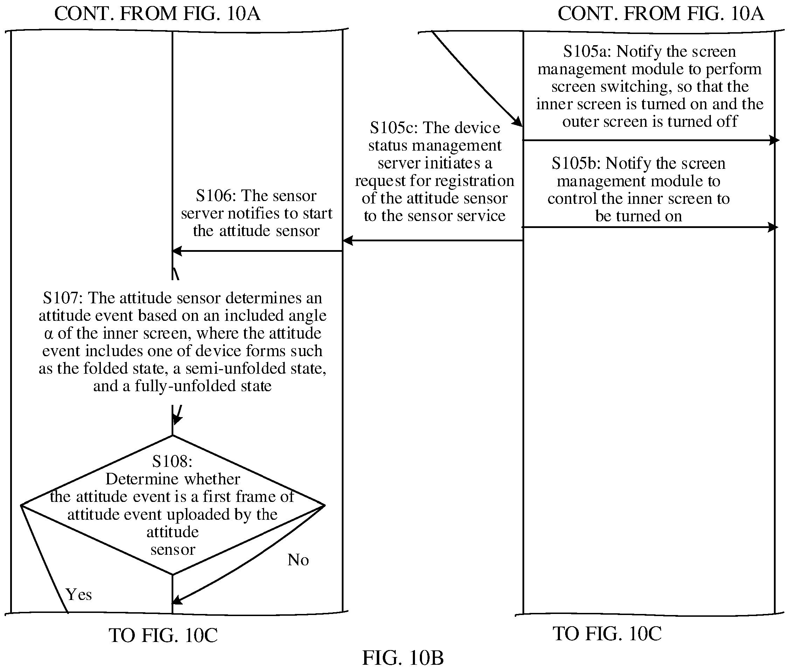

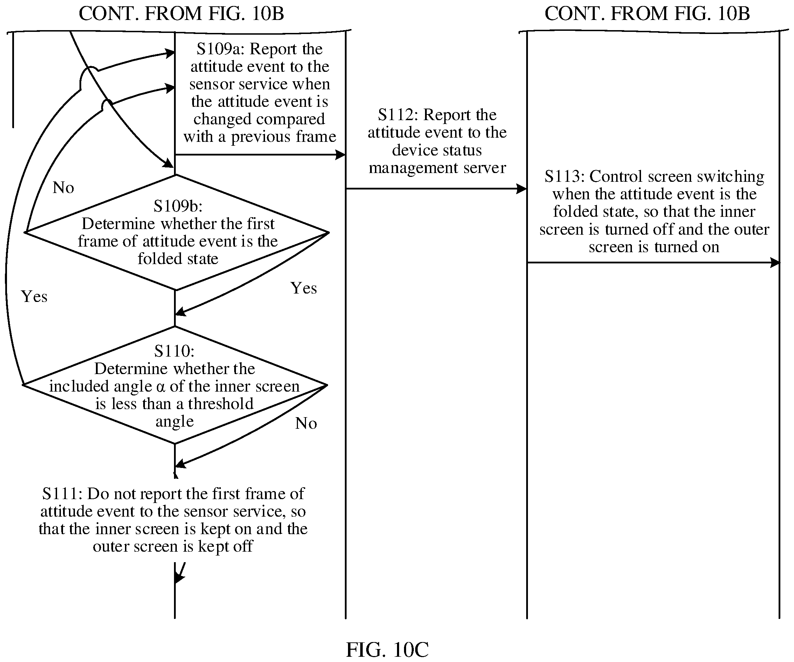

For a procedure in which the electronic device performs screen-on controlling in Case 21, refer to the following descriptions of FIG. 10A to FIG. 10C. Details are not described herein again.

Case 22: Determine that the initial status is unfolded (the non-screen-off state), and close the electronic device when unfolded (in the non-screen-off state). That the initial status of the electronic device is unfolded includes: The device form of the electronic device is the unfolded state before the electronic device is closed, and the included angle of the inner screen is generally greater than "the angle of switching the unfolded state to the folded state+the supplementary angle 2". For example, when the included angle of the inner screen is 180° or approaches 180°, the device form of the electronic device may be the unfolded state. The non-screen-off state means that at least one of the inner screen or the outer screen of the electronic device is on.

As shown in FIG. 9B, in Case 22, the initial status of the electronic device is the non-screen-off state. In this case, the attitude sensor is started. In a process of closing the electronic device, when the included angle of the inner screen is closed from approaching and greater than the angle of "switching the fully-unfolded state to the semi-unfolded state", for example, 180°, to less than or equal to the angle of "switching the fully-unfolded state to the semi-unfolded state" (for example, 145°), the attitude sensor reports an attitude event. In this case, the attitude event is the semi-unfolded state. A position at which the attitude sensor reports the semi-unfolded state may be a position of a white triangle in an attitude operating shaft.

Subsequently, when the included angle of the inner screen is closed from the angle of "switching the fully-unfolded state to the semi-unfolded state" (for example, 145°) to less than or equal to "the angle of switching the unfolded state to the folded state+the supplementary angle 2" (for example, 60°), the attitude sensor reports an attitude event. In this case, the attitude event is the folded state, and the electronic device turns off, based on the folded state, the inner screen and turns on an outer screen. A position at which the attitude sensor reports the folded state may be a position of a black triangle in the attitude operating shaft.

It should be understood that, when the initial status is unfolded (the non-screen-off state), when the electronic device is closed to cause the included angle of the inner screen to be less than or equal to "the angle of switching the unfolded state to the folded state+the supplementary angle 2" (for example, 60°), the inner screen is turned off and the outer screen is turned on. Involved content includes, but is not limited to some or all of the following content.

Content 21: When the initial status is unfolded, and the inner screen is off and the outer screen is on, when the included angle of the inner screen is closed to be less than or equal to "the angle of switching the unfolded state to the folded state+the supplementary angle 2" (for example, 60°), the electronic device keeps the inner screen off and the outer screen on.

Content 22: When the initial status is unfolded, and the inner screen is on and the outer screen is off, when the included angle of the inner screen is closed to be less than or equal to "the angle of switching the unfolded state to the folded state+the supplementary angle 2" (for example, 60°), the electronic device triggers the inner screen to be turned off and the outer screen to be turned on.

Content 23: When the initial status is unfolded, and the inner screen is on and the outer screen is on, when the included angle of the inner screen is closed to be less than or equal to "the angle of switching the unfolded state to the folded state+the supplementary angle 2" (for example, 60°), the electronic device triggers the inner screen to be turned off and keeps the outer screen on.

Subsequently, when the included angle of the inner screen is closed from "the angle of switching the unfolded state to the folded state+the supplementary angle 2" (for example, 60°) to less than or equal to the angle of "switching the far-away state to the approaching state" (for example, 5°), the Hall sensor reports a Hall event. In this case, the Hall event is the approaching state; and the electronic device maps the approaching state to the folded state, which is the same as the folded state reported by the attitude sensor. In this case, the electronic device does not process the Hall event, and continuously keeps the outer screen off and the inner screen on. A position at which the Hall sensor reports the folded state may be a position of a white triangle in a Hall operating shaft.

In Case 22, during closing the electronic device when unfolded (in the non-screen-off state), compared with Embodiment 1, in the case, the electronic device may earlier trigger the inner screen to be turned off and the outer screen to be turned on.

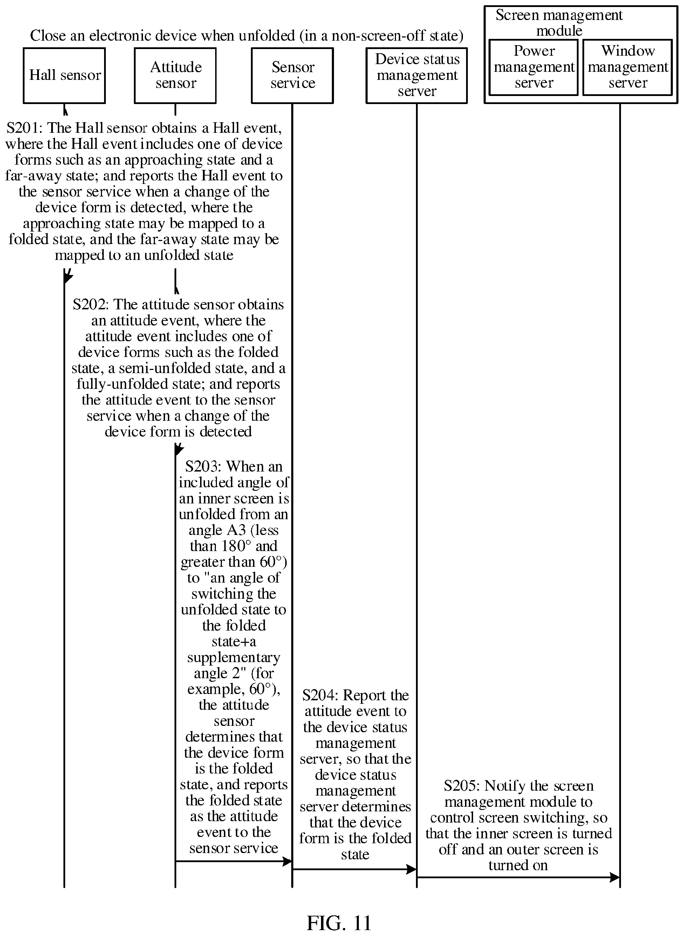

For a procedure in which the electronic device performs screen-on controlling in Case 22, refer to the following descriptions of FIG. 11. Details are not described herein again.

Case 23: Determine that the initial status is unfolded (the screen-off state), and close the electronic device when unfolded (in the screen-off state). In this case, the attitude sensor does not operate in the screen-off state. Therefore, in a process of closing the electronic device, a first involved device form is determined based on the Hall sensor. When the included angle of the inner screen is closed to be less than or equal to the angle of "switching the far-away state to the approaching state" (for example, 5°), the Hall sensor reports a Hall event. In this case, the Hall event is the approaching state, and the electronic device maps the approaching state to the folded state, and keeps both the inner screen and the outer screen off. A schematic diagram of operating of the Hall sensor and the attitude sensor in Case 23 is similar to that of FIG. 6D. Refer to the foregoing descriptions of FIG. 6D. The angle of "switching the unfolded state to the folded state" in FIG. 6D may be replaced with "the angle of switching the unfolded state to the folded state+the supplementary angle 2". Details are not described herein again.

In some other possible cases, in Case 23, when the included angle of the inner screen is closed to be less than or equal to the angle of "switching the far-away state to the approaching state" (for example, 5°), the Hall sensor reports a Hall event. In this case, the Hall event is the approaching state. After mapping the approaching state to the folded state, the electronic device may also trigger the outer screen to be turned on and keep the inner screen off.

FIG. 10A to FIG. 10C show an interaction procedure of modules when an electronic device performs screen-on controlling in Case 21.

With reference to FIG. 9A, and FIG. 10A to FIG. 10C, the following describes in detail a process of performing screen-on controlling during unfolding the electronic device when the initial status is closed (in the screen-off state or the non-screen-off state). Main modules involved in the process include the Hall sensor, the attitude sensor, a sensor service, a device status management server, and a screen management module. For the process, refer to descriptions of Step S101 to Step S113.

S101: The Hall sensor obtains a Hall event, where the Hall event includes one of device forms such as the approaching state and the far-away state; and reports the Hall event to the sensor service when a change of the device form is detected, where the approaching state may be mapped to the folded state, and the far-away state may be mapped to the unfolded state.

Refer to the foregoing Hall operating shaft in FIG. 9A. During unfolding the electronic device when closed (in the screen-off state or the non-screen-off state), when the included angle of the inner screen ranges from 0° to the angle of "switching the approaching state to the far-away state" (for example, 10°), the Hall event obtained by the Hall sensor is the approaching state. The approaching state may be mapped to the folded state. When the included angle of the inner screen is greater than or equal to the angle of "switching the approaching state to the far-away state", the Hall event obtained by the Hall sensor is the far-away state. The far-away state may be mapped to the unfolded state. The unfolded state may be the semi-unfolded state or the fully-unfolded state. This is not limited in embodiments of this application.

S102: When the included angle of the inner screen is unfolded from an angle A0 (approaching 0°) to the angle of "switching the approaching state to the far-away state" (for example, 10°), the Hall sensor determines that the device form is the far-away state, and reports the far-away state as the Hall event to the sensor service.

In Step S102, an example of a position at which the Hall sensor reports the Hall event (far-away state) may be a position of a black triangle in the Hall operating shaft shown in FIG. 9A.

S103: Report the Hall event to the device status management server, so that the device status management server determines that the device form is the unfolded state.

The device status management server may map the Hall event (far-away state) to the unfolded state.

S104: Whether the outer screen is off.

When the outer screen is on (not off), the device status management server may perform Step S105a, so that the outer screen is turned off and the inner screen is turned on.

When the outer screen is off, the device status management server may perform Step S105b, so that the inner screen is turned on and the outer screen is continuously kept off.

S105a: Notify the screen management module to perform screen switching, so that the inner screen is turned on and the outer screen is turned off.

In some possible implementations, the screen management module may power on the inner screen and power down the outer screen through a power management server, so that the outer screen is turned off.

The window management server may draw display content, and display the display content on the inner screen after the inner screen is powered on, so that the inner screen is turned on.

S105b: Notify the screen management module to control the inner screen to be turned on.

In some possible implementations, the screen management module may power on the inner screen through the power management server.

The window management server may draw display content, and display the display content on the inner screen after the inner screen is powered on, so that the inner screen is turned on.

It should be understood that, in the screen-off state, the attitude sensor is not started. After the device status management server determines that the device form is the unfolded state, the attitude sensor may be triggered to be started.

S105c: The device status management server initiates a request for registration of the attitude sensor to the sensor service. After the attitude sensor is registered, when the attitude sensor is started, the device status management server may obtain an attitude event reported by the attitude sensor. An execution occasion of Step S105c and execution occasions of Step S105a and Step S105b are not limited.

S106: The sensor service notifies to start the attitude sensor.

S107: The attitude sensor determines an attitude event based on an included angle α of the inner screen, where the attitude event includes one of device forms such as the folded state, the semi-unfolded state, and the fully-unfolded state.

Refer to the foregoing attitude operating shaft in FIG. 9A. During unfolding the electronic device when closed (in the screen-off state or the non-screen-off state), when the included angle of the inner screen ranges from 0° to "the angle of switching the folded state to the unfolded state+the supplementary angle 1", the attitude event obtained by the attitude sensor is the folded state. When the included angle of the inner screen ranges from "the angle of switching the folded state to the unfolded state+the supplementary angle 1" to the angle of "switching the semi-unfolded state to the fully-unfolded state", the attitude event obtained by the attitude sensor is the semi-unfolded state. When the included angle of the inner screen ranges from the angle of "switching the semi-unfolded state to the fully-unfolded state" to 180°, the attitude event obtained by the attitude sensor is the fully-unfolded state.

S108: The attitude sensor determines whether the attitude event is a first frame of attitude event uploaded by the attitude sensor.

When it is determined that the attitude event is the first frame of attitude event, to process a case in which the first frame of attitude event is the folded state and conflicts with the unfolded state mapped to by the far-away state reported by the Hall sensor, Step S109b may be performed, or Step S109b and Step S110 may be performed, to determine whether to report the folded state.

When it is determined that the attitude event is not the first frame of attitude event, Step S109a may be performed.

S109a: When the attitude event is changed compared with a previous frame, the attitude sensor reports the attitude event to the sensor service.

It should be understood that, an occasion at which the attitude sensor reports an attitude event includes: When the attitude event is a first frame, the attitude event may be reported after Condition 1 is met, in other words, the first frame of attitude event is changed from the previous frame by default; or when a non-first frame of attitude event is changed compared with a previous frame, the non-first frame of attitude event may be reported, and when the non-first frame of attitude event is not changed compared with the previous frame, the non-first frame of attitude event may not be reported. Condition 1 includes: The first frame of attitude event is not the folded state, or the attitude sensor determines that the included angle of the inner screen is less than a threshold angle. For detailed descriptions of the threshold angle, refer to descriptions of the threshold angle in Step S110. Details are not described herein.

S109b: The attitude sensor determines whether the first frame of attitude event is the folded state.

When it is determined that the first frame of attitude event is not the folded state, the attitude sensor may perform Step S109a, and report the first frame of attitude event.

When it is determined that the first frame of attitude event is the folded state, in some possible cases, the attitude sensor may perform Step S110, to further determine whether the included angle of the inner screen is less than the threshold angle. The threshold angle is the preset angle 7 described above, for example, may be 4°. When the included angle of the inner screen is greater than the threshold angle, Step S109a is performed, to report the first frame of attitude event. When the included angle of the inner screen is greater than the threshold angle, Step S111 is performed, so that the first frame of attitude event is not reported. In some other possible cases, the attitude sensor may not perform Step S110, and directly perform Step S111, so that the first frame of attitude event is not reported.

S110: The attitude sensor determines whether the included angle α of the inner screen is less than the threshold angle.

The threshold angle is the preset angle 7 described above, for example, may be 4°. For related descriptions of the preset angle 7, refer to the foregoing content. Details are not described herein again.

When the attitude sensor determines that the included angle α of the inner screen is less than the threshold angle, Step S109a may be performed, to report the first frame of attitude event to the sensor service.

When the attitude sensor determines that the included angle α of the inner screen is greater than the threshold angle, Step S111 is performed, so that the first frame of attitude event may not be reported to the sensor service, so that the inner screen is kept on and the outer screen is kept off.

S111: The attitude sensor does not report the first frame of attitude event to the sensor service, so that the inner screen is kept on and the outer screen is kept off.

S112: The attitude sensor reports the attitude event to the device status management server.

S113: When the attitude event is the folded state, the device status management server controls screen switching through the screen management module, so that the inner screen is turned off and the outer screen is turned on.

The attitude event in Step S113 may be divided into the following results for description.

Result 21: When the attitude event is the folded state and is the first frame of attitude event, it indicates that when the Hall sensor fails, there is a false positive of the far-away state now (which is actually the approaching state, where the user may not expect to unfold the electronic device). Step S113 may be performed, to correct the false positive from the Hall sensor based on the attitude sensor, so that the electronic device triggers the inner screen to be turned off and the outer screen to be turned on.

Result 22: When the attitude event is the folded state and is not the first frame of attitude event, it indicates that the user closes the electronic device again after the electronic device is unfolded to cause the included angle of the inner screen to be greater than or equal to "the angle of switching the unfolded state to the folded state+the supplementary angle 2", so that the electronic device is further switched from the unfolded state to the folded state. In this case, the electronic device may trigger the inner screen to be turned off and the outer screen to be turned on.

It should be understood that, when the attitude event is not the folded state, the attitude event may be the semi-unfolded state or the fully-unfolded state, and is consistent with the unfolded state mapped to by the far-away state reported by the Hall sensor. The device status management server may not process the unfolded state, and keeps the inner screen on and the outer screen off.

**FIG. 11** **shows an interaction procedure of modules when an electronic device performs screen-on controlling in Case 22.**

With reference to FIG. 9B and FIG. 11, the following describes in detail a process of performing screen-on controlling during closing the electronic device when the initial status is unfolded (in the non-screen-off state). Main modules involved in the process include the Hall sensor, the attitude sensor, a sensor service, a device status management server, and a screen management module. For the process, refer to descriptions of Step S201 to Step S205.

S201: The Hall sensor obtains a Hall event, where the Hall event includes one of device forms such as the approaching state and the far-away state; and reports the Hall event to the sensor service when a change of the device form is detected, where the approaching state may be mapped to the folded state, and the far-away state may be mapped to the unfolded state.

Refer to the foregoing Hall operating shaft in FIG. 9B. During closing the electronic device when unfolded (in the non-screen-off state), when the included angle of the inner screen ranges from 180° to the angle of "switching the far-away state to the approaching state" (for example, 5°), the Hall event obtained by the Hall sensor is the far-away state. The far-away state may be mapped to the unfolded state. When the included angle of the inner screen is less than or equal to the angle of "switching the far-away state to the approaching state", the Hall event obtained by the Hall sensor is the approaching state. The approaching state may be mapped to the folded state. The unfolded state may be the semi-unfolded state or the fully-unfolded state. This is not limited in embodiments of this application.

It should be understood that, although the Hall sensor may operate, during closing the electronic device when unfolded (in the non-screen-off state), the device status management server receives the folded state reported by the attitude sensor when the included angle of the inner screen is closed to "the angle of switching the unfolded state to the folded state+the supplementary angle 2" (for example, 60°). To be specific, when the included angle of the inner screen is closed to "the angle of switching the unfolded state to the folded state+the supplementary angle 2" (for example, 60°), the device status management server may trigger the inner screen to be turned off and the outer screen to be turned on. When the attitude sensor is damaged or fails due to damage to a device on which the attitude sensor depends, the device status management server may trigger, based on the Hall sensor, the inner screen to be turned off and the outer screen to be turned on when the included angle of the inner screen is closed to the angle of "switching the far-away state to the approaching state" (for example, 5°). For a process in which the device status management server triggers, based on the attitude sensor, the inner screen to be turned off and the outer screen to be turned on, refer to descriptions of Step S202 to Step S205.

S202: The attitude sensor obtains an attitude event, where the attitude event includes one of device forms such as the folded state, the semi-unfolded state, and the fully-unfolded state; and reports the attitude event to the sensor service when a change of the device form is detected.

Refer to the foregoing attitude operating shaft in FIG. 9B. During closing the electronic device when unfolded (in the non-screen-off state), when the included angle of the inner screen ranges from 180° to the angle of "switching the fully-unfolded state to the semi-unfolded state" (for example, 145°), the attitude event obtained by the attitude sensor is the fully-unfolded state. When the included angle of the inner screen ranges from the angle of "switching the fully-unfolded state to the semi-unfolded state" to "the angle of switching the unfolded state to the folded state+the supplementary angle 2" (for example, 60°), the attitude event obtained by the attitude sensor is the semi-unfolded state. When the included angle of the inner screen ranges from "the angle of switching the unfolded state to the folded state+the supplementary angle 2" to 0°, the attitude event obtained by the attitude sensor is the folded state.

It should be understood that, an occasion at which the attitude sensor reports an attitude event includes: When the attitude event is a first frame, the attitude event may be reported; or when a non-first frame of attitude event is changed compared with a previous frame, the non-first frame of attitude event may be reported, and when the non-first frame of attitude event is not changed compared with the previous frame, the non-first frame of attitude event may not be reported.

S203: When the included angle of the inner screen is unfolded from an angle A3 (less than 180° and greater than 60°) to "the angle of switching the unfolded state to the folded state+the supplementary angle 2" (for example, 60°), the attitude sensor determines that the device form is the folded state, and reports the folded state as the attitude event to the sensor service.

In Step S203, an example of a position at which the attitude sensor reports the attitude event (folded state) may be a position of a black triangle in the attitude operating shaft shown in FIG. 9B.

S204: Report the attitude event to the device status management server, so that the device status management server determines that the device form is the folded state.

S205: Notify the screen management module to control screen switching, so that the inner screen is turned off and the outer screen is turned on.

In some possible implementations, the screen management module may power on the outer screen and power down the inner screen through a power management server, so that the inner screen is turned off.

The window management server may draw display content, and display the display content on the outer screen after the outer screen is powered on, so that the outer screen is turned on.

It should be understood that, an interaction procedure of modules when the electronic device performs screen-on controlling in Case 23 is similar to the interaction procedure of the modules when the electronic device performs screen-on controlling in Case 22. A difference is that the attitude sensor is not started and the device form is determined based on the Hall event reported by the Hall sensor. Refer to the foregoing descriptions of related content in FIG. 11. Details are not described herein again.

It should be understood that, a proper screen-on scenario during unfolding or closing the electronic device involved in this application may include Scenario 1 and Scenario 2 described above. Scenario 1 corresponds to content described in Case 11 in Embodiment 1 and content described in Case 21 in Embodiment 2. Scenario 2 corresponds to content described in Case 13 in Embodiment 1 and content described in Case 22 in Embodiment 2.

In addition to Scenario 1 and Scenario 2, the proper screen-on scenario during unfolding or closing the electronic device may further include other scenarios, for example, the following Scenario 3 to Scenario 6. Scenario 3 to Scenario 6 may be implemented in Embodiment 2.

Scenario 3: When the initial status of the electronic device is closed and both the inner screen and the outer screen are off, during unfolding the electronic device, when the electronic device is unfolded to cause the included angle of the inner screen to be greater than or equal to the angle of "switching the approaching state to the far-away state" (for example, 10°), the Hall sensor reports that the device form is the far-away state, and the electronic device maps the far-away state to the unfolded state, triggers the inner screen to be turned on and the outer screen to be turned off, and starts the attitude sensor. Subsequently, after the electronic device is continuously unfolded to an angle ranging from the angle of "switching the approaching state to the far-away state" to "the angle of switching the folded state to the unfolded state+the supplementary angle 1" (for example, 65°), unfolding is stopped, and the electronic device is not closed. In this way, the electronic device can always keep the inner screen on and the outer screen off, and does not trigger the inner screen to be turned off and the outer screen to be turned on after the preset time T (for example, 1s). In Embodiment 2, when the first frame of attitude event uploaded by the attitude sensor is the folded state and the included angle of the inner screen is greater than the preset angle 7 (for example, 4°), the electronic device does not obtain the first frame of attitude event reported by the attitude sensor. Therefore, the electronic device may continuously cause the inner screen to be turned on and the outer screen to be turned off based on the far-away state reported by the Hall sensor.

Scenario 4: When the initial status of the electronic device is closed and both the inner screen and the outer screen are off, during unfolding the electronic device, when the electronic device is unfolded to cause the included angle of the inner screen to be greater than or equal to the angle of "switching the approaching state to the far-away state", the Hall sensor reports that the device form is the far-away state, and the electronic device maps the far-away state to the unfolded state, triggers the inner screen to be turned on and keeps the outer screen off, and starts the attitude sensor. Subsequently, during continuously unfolding the electronic device, when the included angle of the inner screen is greater than or equal to "the angle of switching the folded state to the unfolded state+the supplementary angle 1" at a moment A, the attitude sensor may report that the device form is the unfolded state, and the electronic device keeps the inner screen on and the outer screen off. At a moment B, unfolding of the electronic device is stopped, and when the electronic device is closed to cause the included angle of the inner screen to be less than or equal to "the angle of switching the unfolded state to the folded state+the supplementary angle 2" (for example, 60°), the electronic device determines, based on the attitude sensor, that the device form is the folded state, and triggers the inner screen to be turned off and the outer screen to be turned on. A time difference between the moment A and the moment B may be less than the preset time T. In Embodiment 2, a non-first frame of attitude event obtained by the attitude sensor may be reported when the non-first frame of attitude event is different from a previous frame attitude event. Therefore, the non-first frame of attitude event is not constrained by reporting only after the preset time T (involved in Embodiment 1).

Scenario 5: When an initial status of the electronic device is closed (for example, the included angle of the inner screen is equal to 0° or approaches 0°), during unfolding the electronic device regardless of whether the electronic device is in the screen-off state or the non-screen-off state, when the electronic device is unfolded to cause the included angle of the inner screen to be greater than or equal to the angle of "switching the approaching state to the far-away state", the Hall sensor reports that the device form is the far-away state, and the electronic device maps the far-away state to the unfolded state, triggers the inner screen to be turned on and keeps the outer screen off, and starts the attitude sensor. Subsequently, after the electronic device is continuously unfolded to cause the included angle of the inner screen to be greater than or equal to the angle of "switching the approaching state to the far-away state" (for example, 10°) and less than "the angle of switching the folded state to the unfolded state+the supplementary angle 1" (for example, 65°), the electronic device keeps the inner screen on and the outer screen off. Subsequently, unfolding of the electronic device is stopped and the electronic device starts to be closed, and when the electronic device is closed to cause the included angle of the inner screen to be less than or equal to the angle of "switching the far-away state to the approaching state" (for example, 5°) at a moment C, the electronic device determines, based on the Hall sensor, that the device form is the approaching state, maps the approaching state to the folded state, and triggers the inner screen to be turned off and the outer screen to be turned on. Scenario 5 may be implemented in Embodiment 2, and cannot be implemented in Embodiment 1. The reason is that in Embodiment 1, in the non-screen-off state, the attitude sensor is started, and the electronic device does not process the Hall event reported by the Hall sensor. Therefore, when the electronic device is closed to cause the included angle of the inner screen to be less than or equal to the angle of "switching the far-away state to the approaching state" (for example, 5°) at the moment C, after the Hall sensor detects the approaching state, the approaching state is reported. However, the electronic device does not process the approaching state. Therefore, the electronic device cannot trigger the inner screen to be turned off and the outer screen to be turned on. When the initial status of the electronic device is closed and is the screen-off state, the reason why Scenario 5 cannot be implemented in Embodiment 1 further includes: The attitude event reported by the attitude sensor can be processed by the electronic device only after a moment T.

Scenario 6: When the initial status of the electronic device is unfolded (for example, the included angle of the inner screen is equal to 180° or approaches 180°), and in the non-screen-off state, when the electronic device is closed to cause the included angle of the inner screen to be less than the "angle of switching the unfolded state to the folded state+the supplementary angle 2" (for example, 60°) and greater than the angle of "switching the unfolded state to the folded state" (for example, 40°), the attitude sensor determines that the device form is the folded state in this case, and the electronic device keeps the inner screen off and the outer screen on. In this case, at a moment D, closing of the electronic device is stopped, and then the electronic device starts to be unfolded. When the included angle of the inner screen is unfolded to be greater than or equal to the "the angle of switching the folded state to the unfolded state+the supplementary angle 1" (for example, 65°), the attitude sensor determines that the device form is changed to the semi-unfolded state. In this case, the electronic device triggers, based on the semi-unfolded state, the inner screen to be turned on and the outer screen to be turned off. Scenario 6 may be implemented in Embodiment 2, and cannot be implemented in Embodiment 1. The reason is that in Embodiment 1, when closing of the electronic device is stopped at the moment D, when the included angle of the inner screen is greater than the "angle of switching the unfolded state to the folded state" (for example, 40°) and less than the "the angle of switching the unfolded state to the folded state+the supplementary angle 2" (for example, 60°), in Embodiment 1, it is determined that the device form of the electronic device is not the folded state but the semi-unfolded state in this case. Therefore, after the moment D, when the electronic device is unfolded to cause the included angle of the inner screen to be greater than or equal to "the angle of switching the folded state to the unfolded state+the supplementary angle 1" (for example, 65°), the electronic device is still in the semi-unfolded state. Since the device form is not changed, the attitude sensor does not report the semi-unfolded state. Therefore, the electronic device cannot determine, based on the attitude sensor, that the device form is the folded state. In this case, the electronic device continuously keeps the inner screen on and the outer screen off, and cannot switch to cause the outer screen to be turned on and the inner screen to be turned off.

In some possible embodiments, the Hall sensor may not be used, and screen-on controlling may be performed based on the attitude sensor. In a process of unfolding the electronic device when the initial status of the electronic device is closed (the screen-off state or the non-screen-off state), when the electronic device is unfolded to cause the included angle of the inner screen to be greater than or equal to the preset angle 3 (for example, the angle of "switching the folded state to the unfolded state" or "the angle of switching the folded state to the unfolded state+the supplementary angle 1" described above), the attitude sensor may determine that the device form of the electronic device is updated from the folded state to the unfolded state (the semi-unfolded state or the fully-unfolded state), and the electronic device may be in a state in which the inner screen is on and the outer screen is off. In a process of closing the electronic device when the initial status of the electronic device is unfolded (the screen-off state or the non-screen-off state), when the electronic device is closed to cause the included angle of the inner screen to be greater than or equal to the preset angle 2 (for example, the "angle of switching the unfolded state to the folded state" or "the angle of switching the unfolded state to the folded state+the supplementary angle 2" described above), the attitude sensor may determine that the device form of the electronic device is updated from the unfolded state to the folded state, and the electronic device may be in a state in which the inner screen is off and the outer screen is on.

It should be understood that, unfolding the electronic device involved in embodiments of this application may indicate that the electronic device is unfolded under a user operation, or may indicate that the electronic device is unfolded to cause the included angle of the inner screen to reach a specific angle. Closing the electronic device involved in embodiments of this application may indicate that the electronic device is closed under a user operation, or may indicate that the electronic device is closed to cause the included angle of the inner screen to reach a specific angle.

An example of an electronic device provided in an embodiment of this application is first described below.

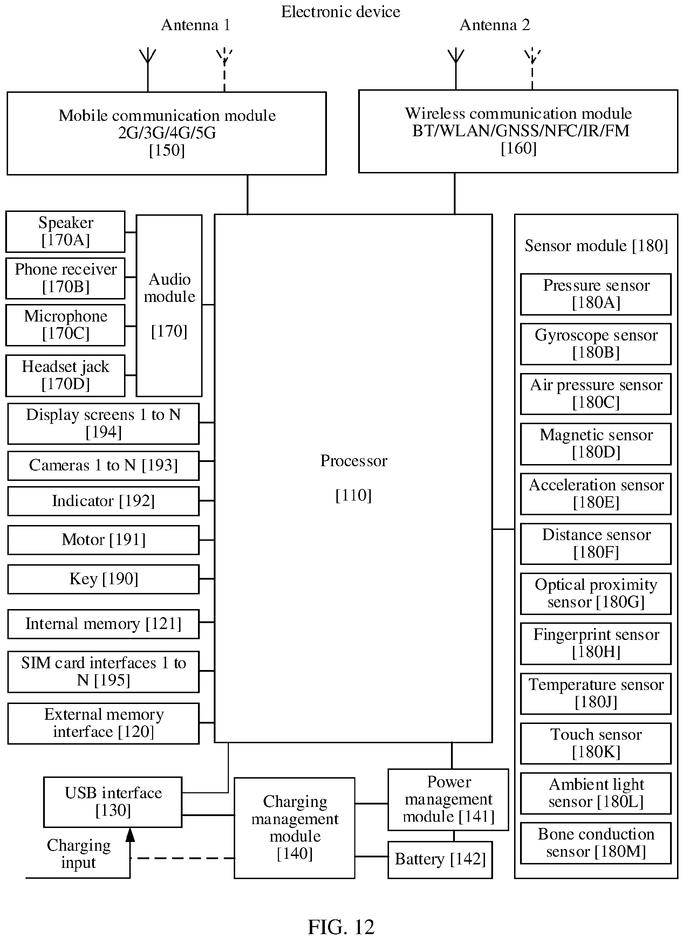

**FIG. 12** **is a schematic diagram of a structure of an electronic device according to an embodiment of this application.**

This embodiment is described below in detail by using the electronic device as an example. It should be understood that, the electronic device may have more or fewer parts than those shown in the figure, may combine two or more components, or may have a different component configuration. Various components shown in the figure may be implemented in hardware, software, or in a combination of hardware and software that includes one or more signal processing and/or application-specific integrated circuits.

The electronic device may include: a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that, the schematic structure in this embodiment of this application constitutes no specific limitation on the electronic device. In some other embodiments of this application, the electronic device may include more or fewer components than those shown in the figure, or some components may be combined, or some components may be divided, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device. The controller may generate an operation control signal based on an instruction operation code and a time-sequence signal, to implement control of fetching instructions and executing the instructions.

The processor 110 may be further configured with a memory, to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory, which avoids repeated access, and reduces waiting time of the processor 110, thereby improving system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, and the like.

It may be understood that, a schematic interface connection relationship between the modules in this embodiment of this application is merely an example for description, and constitutes no limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from a charger.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display screen 194, the camera 193, the wireless communication module 160, and the like.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device may be configured to cover one or more communication frequency bands. Different antennas may also be multiplexed to improve utilization of the antennas.

The mobile communication module 150 may provide a solution to wireless communication such as 2G/3G/4G/5G applied to the electronic device.

The modem processor may include a modulator and a demodulator.

The wireless communication module 160 may provide a solution for wireless communication including wireless local area networks (wireless local area networks, WLAN) (such as a wireless fidelity (wireless fidelity, Wi-Fi) network), Bluetooth (Bluetooth, BT), and the like to be applied to the electronic device.

In some embodiments, in the electronic device, the antenna 1 is coupled to the mobile communication module 150, and the antenna 2 is coupled to the wireless communication module 160, so that the electronic device may communicate with a network and another device by using a wireless communication technology. The wireless communication technology may include a global system for mobile communications (global system for mobile communications, GSM), a general packet radio service (general packet radio service, GPRS), and the like.

The electronic device implements a display function by using the GPU, the display screen 194, the application processor, and the like.

The display screen 194 is configured to display an image, a video, or the like. The display screen 194 includes a display panel. The display panel may use a liquid crystal display (liquid crystal display, LCD). The display panel may also use an organic light-emitting diode (organic light-emitting diode, OLED), an active-matrix organic light-emitting diode (active-matrix organic light-emitting diode, AMOLED), a flexible light-emitting diode (flex light-emitting diode, FLED), a miniled, a microled, a micro-oled, a quantum dot light-emitting diode (quantum dot light-emitting diode, QLED), and the like. In some embodiments, the electronic device may include one or N display screens 194, and N is a positive integer greater than 1. The electronic device in this embodiment of this application includes two display screens on different sides. One of the two display screens may be referred to as an inner screen, and the other one may be referred to as an outer screen. The inner screen may be a display screen having a function of folding and unfolding. When the electronic device is folded, the inner screen is also folded. When the electronic device is unfolded, the inner screen is also unfolded.

The internal memory 121 may be one or more random access memories (random access memory, RAM), and one or more non-volatile memories (non-volatile memory, NVM).

The non-volatile memory may include a disk storage device and a flash memory (flash memory).

According to an operating principle, the flash memory may be classified into NOR FLASH, NAND FLASH, 3D NAND FLASH, and the like; and according to potential orders of storage cells, the flash memory may be classified into a single-level storage cell (single-level cell, SLC), and the like.

The electronic device may implement an audio function such as music playback, recording, and the like by using the audio module 170, the speaker 170A, the phone receiver 170B, the microphone 170C, the headset jack 170D, the application processor, and the like.

The gyroscope sensor 180B may be configured to determine a motion attitude of the electronic device. In some embodiments, an angular velocity of the electronic device around three axes (namely, x, y, and z axes) may be determined by using the gyroscope sensor 180B. The gyroscope sensor 180B may be used for image stabilization in image capture. For example, when the shutter is pressed, the gyroscope sensor 180B detects an angle at which the electronic device jitters, and calculates, based on the angle, a distance for which a lens module needs to compensate, and allows the lens to cancel the jitter of the electronic device through reverse motion, thereby implementing image stabilization. The gyroscope sensor 180B may also be used in navigation and a motion sensing game scene.

The magnetic sensor 180D includes a Hall sensor. The electronic device may detect an opening state or a closing state of a flip leather case by using the magnetic sensor 180D. In some embodiments, when the electronic device is a clamshell phone, the electronic device may detect an opening state or a closing state of a flip cover according to the magnetic sensor 180D. Further, based on a detected opening or closing state of the leather case or a detected opening or closing state of the flip cover, a feature such as automatic unlocking of the flip cover is set.

In some possible cases, the Hall sensor may be directly implemented as a physical Hall sensor, or may be implemented as a virtual Hall sensor based on a magnetometer. This is not limited herein. A Hall event reported by the Hall sensor is an onchange event.

The acceleration sensor 180E may detect an acceleration value of the electronic device in each direction (generally in three axes). When the electronic device is stationary, a magnitude and a direction of a gravity may be detected. The acceleration sensor may be further configured to recognize an attitude of the electronic device, and is applied to an application such as switching between landscape orientation and portrait orientation or a pedometer.

In some possible cases, the electronic device may further include an attitude sensor (not shown in the figure). The attitude sensor may be a physical sensor, or may be a virtual attitude sensor implemented by using a fusion algorithm based on sensor data such as an angle and acceleration or based on virtual sensor data such as an included angle. The attitude sensor can provide rich and accurate attitude data such as a folded state, a semi-unfolded state, a fully-unfolded state, and a notebook state. An attitude event reported by the attitude sensor is an onchange event.

In this embodiment of this application, the processor 110 may invoke computer instructions stored in the internal memory 121, to enable a terminal to perform the screen-on controlling method in embodiments of this application.

The foregoing embodiments are merely intended for describing the technical solutions of this application, but not for limiting this application. Although this application is described in detail with reference to the foregoing embodiments, it should be understood that a person of ordinary skill in the art may still make modifications to the technical solutions described in the foregoing embodiments or make equivalent replacements to some technical features thereof, without departing from the scope of the technical solutions of embodiments of this application.

As used in the foregoing embodiments, based on the context, the term "when" may be interpreted as a meaning of "if", "after", "in response to determining... ", or "in response to detecting...". Similarly, based on the context, the phrase "if determining" or "if detecting (a stated condition or event)" may be interpreted as a meaning of "when determining...", "in response to determining... ", "when detecting (a stated condition or event)", or "in response to detecting ... (a stated condition or event)".

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium that can be accessed by the computer, or a data storage device, such as a server or a data center in which one or more usable mediums are integrated. The usable medium may be a magnetic medium (for example, a soft disk, a hard disk, or a magnetic tape), an optical medium (for example, a DVD), a semiconductor medium (for example, an SSD), or the like.

A person of ordinary skill in the art may understand that all or some of the procedures in the methods in the embodiments may be implemented by using a computer program instructing relevant hardware. The program may be stored in a computer-readable storage medium. When the program is executed, the procedures in the foregoing method embodiments may be performed. The foregoing storage medium includes: any medium that can store program code, such as a ROM, a random access memory RAM, a magnetic disk, or an optical disc.

## Claims

1. A screen-on controlling method, applied to an electronic device having a foldable screen, wherein the electronic device comprises an inner screen and an outer screen, the inner screen is foldable to form a first screen and a second screen, and the method comprises:
when an initial status of the electronic device is closed and both the inner screen and the outer screen are off, turning on, by the electronic device, the inner screen, and keeping the outer screen off when the electronic device is unfolded to cause a first included angle to be greater than or equal to a first angle, wherein the first included angle is an included angle between the first screen and the second screen; in a process of unfolding the electronic device when the initial status of the electronic device is closed, the first included angle increases; and in a process of closing the electronic device when the initial status of the electronic device is unfolded, the first included angle decreases;
when the initial status of the electronic device is closed and at least one of the inner screen or the outer screen is on, causing the electronic device to be in a state in which the inner screen is on and the outer screen is off when the electronic device is unfolded to cause the first included angle to be greater than or equal to the first angle; and
when the initial status of the electronic device is unfolded and at least one of the inner screen or the outer screen is on, causing the electronic device to be in a state in which the outer screen is on and the inner screen is off when the electronic device is closed to cause the first included angle to be less than or equal to a second angle, wherein the second angle is greater than the first angle.

2. The method according to claim 1, wherein after the electronic device is unfolded to cause the first included angle to be greater than or equal to the first angle when the inner screen is off and the outer screen is on, the method further comprises:
turning on, by the electronic device, the inner screen, and turning off the outer screen.

3. The method according to claim 1 or 2, wherein after the electronic device is unfolded to cause the first included angle to be greater than or equal to the first angle when both the inner screen and the outer screen are on, the method further comprises:
turning off, by the electronic device, the outer screen.

4. The method according to any one of claims 1 to 3, wherein after the electronic device is closed to cause the first included angle to be less than or equal to the second angle when the inner screen is on and the outer screen is on, the method further comprises:
turning off, by the electronic device, the inner screen, and keeping the outer screen off.

5. The method according to any one of claims 1 to 3, wherein after the electronic device is closed to cause the first included angle to be less than or equal to the second angle when the inner screen is on and the outer screen is off, the method further comprises:
turning off, by the electronic device, the inner screen, and turning on the outer screen.

6. The method according to any one of claims 1 to 5, wherein the method further comprises:
when the first included angle is greater than or equal to the first angle and less than a third angle and the electronic device is in the state in which the inner screen is on and the outer screen is off, turning off, by the electronic device, the inner screen, and turning on the outer screen when the electronic device is closed to cause the first included angle to be less than or equal to a fourth angle, wherein the fourth angle is less than the first angle.

7. The method according to any one of claims 1 to 6, wherein when both the inner screen and the outer screen are off, after the electronic device turns on the inner screen and keeps the outer screen off when the electronic device is unfolded to cause the first included angle to be greater than or equal to the third angle at a first moment, the method further comprises:
turning off, by the electronic device, the inner screen, and turning on the outer screen when the electronic device is closed to cause the first included angle to be less than the second angle at a second moment, wherein the second moment is later than the first moment.

8. The method according to claim 7, wherein a time difference between the second moment and the first moment is less than or equal to preset duration.

9. The method according to any one of claims 5 to 8, wherein a first form set for a first sensor of the electronic device comprises that the first included angle is less than or equal to the first angle, and a second form set for the first sensor of the electronic device comprises that the first included angle is greater than the first angle and less than the second angle; a first form set for a second sensor of the electronic device comprises that the first included angle is less than the second angle; when at least one of the inner screen or the outer screen is on, the electronic device starts the second sensor;
when the initial status of the electronic device is closed, and the inner screen is off and the outer screen is on, after the electronic device is unfolded to cause the first included angle to be greater than or equal to the first angle, the turning on, by the electronic device, the inner screen, and turning off the outer screen specifically comprises:
when the electronic device is unfolded to cause the first included angle of the inner screen to be greater than or equal to the first angle, turning on, by the electronic device, the inner screen, and turning off the outer screen when the electronic device determines, based on the first sensor, that a device form of the electronic device is changed from the first form to the second form, wherein the second form is different from the first form; and the first form indicates that the electronic device is folded, and the second form indicates that the electronic device is unfolded; and
when the initial status of the electronic device is unfolded, and the inner screen is on and the outer screen is off, after the electronic device is closed to cause the first included angle to be less than or equal to the second angle, the turning off, by the electronic device, the inner screen, and turning on the outer screen specifically comprises:
when the electronic device is unfolded to cause the first included angle of the inner screen to be less than or equal to the second angle, turning off, by the electronic device, the inner screen, and turning on the outer screen when the electronic device determines, based on the second sensor, that the device form of the electronic device is the first form.

10. The method according to claim 9, wherein when the initial status of the electronic device is closed, the first included angle is less than the first angle, and both the inner screen and the outer screen are off, after the electronic device is unfolded to cause the first included angle to be greater than or equal to the first angle, the turning on, by the electronic device, the inner screen, and keeping the outer screen off specifically comprises:
when the electronic device is unfolded to cause the first included angle to be greater than or equal to the first angle, turning on, by the electronic device, the inner screen, and keeping the outer screen off when the electronic device determines, based on the first sensor, that the device form of the electronic device is changed from the first form to the second form; and after the turning on, by the electronic device, the inner screen, and keeping the outer screen off, the method further comprises:
starting, by the electronic device, the second sensor, wherein
the second sensor obtains a first event, wherein the first event indicates the device form of the electronic device; and
turning off, by the electronic device, the inner screen, and turning on the outer screen when the second sensor determines that the first event is not a first frame event, or the first event is the first frame event and the first event indicates that the device form of the electronic device is the second form; or
keeping, by the electronic device, the inner screen on and the outer screen off when the second sensor determines that the first event is a first frame event and the first event indicates that the device form of the electronic device is the first form.

11. The method according to claim 10, wherein the turning off, by the electronic device, the inner screen, and turning on the outer screen when the second sensor determines that the first event is not a first frame event, or the first event is the first frame event and the first event indicates that the device form of the electronic device is the second form specifically comprises:
turning off, by the electronic device, the inner screen, and turning on the outer screen when the second sensor determines that the first event is the first frame event, the first event indicates that the device form of the electronic device is the first form, and the first included angle is less than a fifth angle; and
the skipping processing the first event when the second sensor determines that the first event is a first frame event and the first event indicates that the device form of the electronic device is the first form specifically comprises:
keeping, by the electronic device, the inner screen on and the outer screen off when the second sensor determines that the first event is the first frame event, the first event indicates that the device form of the electronic device is the first form, and the first included angle is greater than the fifth angle.

12. The method according to any one of claims 9 to 11, wherein the method further comprises:
when the first included angle is greater than or equal to the first angle and less than the third angle and the electronic device is in the state in which the inner screen is on and the outer screen is off, when the electronic device is closed to cause the first included angle to be less than or equal to the fourth angle, turning off, by the electronic device, the inner screen, and turning on the outer screen when the electronic device determines, based on the first sensor, that the device form of the electronic device is changed from the second form to the first form.

13. The method according to any one of claims 1 to 12, wherein the first sensor is a Hall sensor, and the second sensor is an attitude sensor.

14. A computer storage medium, wherein the storage medium stores a computer program, the computer program comprises executable instructions, and the executable instructions, when executed by a processor, enable the processor to perform the method according to any one of claims 1 to 13.

15. An electronic device, wherein the electronic device comprises one or more processors and a memory, wherein the memory is coupled to the one or more processors, the memory is configured to store computer program code, the computer program code comprises computer instructions, and the one or more processors invoke the computer instructions, to enable the electronic device to perform the method according to any one of claims 1 to 13.

16. A chip system, wherein the chip system is used in an electronic device, the chip system comprises one or more processors, and the processor is configured to invoke computer instructions to enable the electronic device to perform the method according to any one of claims 1 to 13.
